# EUROPÄISCHE PATENTSCHRIFT

(11) **EP 1 889 894 B1**
(45) Veröffentlichungstag und Bekanntmachung des Hinweises auf die Patenterteilung: **21.10.2009**
(21) Anmeldenummer: 07012928.3
(22) Anmeldetag: 02.07.2007
(51) Int. Cl.: C09K 19/42

(54) **Flüssigkristallines Medium**
Liquid crystalline medium
Milieu cristallin liquide

(30) Priorität: 25.07.2006 DE 102006034340
(43) Veröffentlichungstag der Anmeldung: 20.02.2008
(73) Patentinhaber: Merck Patent GmbH, 64293 Darmstadt (DE)
(72) Erfinder: Bernatz, Georg, Dr., 64289 Darmstadt (DE); Klasen-Memmer, Melanie, Dr., 67259 Heuchelheim (DE); Bremer, Matthias, Dr., 64295 Darmstadt (DE)

(56) Entgegenhaltungen:
- EP-A- 1 498 468
- DE-A1-102005 027 763
- GB-A- 2 379 931

## Beschreibung

Die vorliegende Erfindung betrifft ein flüssigkristallines Medium enthaltend eine oder mehrere polymerisierbare Verbindungen, dessen Verwendung für elektrooptische Zwecke, und dieses Medium enthaltende Anzeigen, insbesondere Anzeigen beruhend auf dem DAP- (Deformation aufgerichteter Phasen), ECB- (electrically controlled birefringence), VA-(vertically aligned), CSH- (colour super homeotropic) oder OCB- (optically compensated bend) Effekt.

Das Prinzip der elektrisch kontrollierten Doppelbrechung, der ECB- oder auch DAP-Effekt ("Deformation aufgerichteter Phasen") wurde erstmals 1971 beschrieben (M. F. Schieckel and K. Fahrenschon, "Deformation of nematic liquid crystals with vertical orientation in electrical fields", Appl. Phys. Lett. 19 (1971), 3912). Es folgten Arbeiten von J. F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, daß flüssigkristalline Phasen hohe Werte für das Verhältnis der elastischen Konstanten K₃₃/K₁₁, hohe Werte für die optische Anisotropie Δn und Werte für die dielektrische (DK-) Anisotropie Δε von etwa -0,5 bis etwa -5 aufweisen müssen, um für hochinformative Anzeigeelemente basierend auf dem ECB-Effekt eingesetzt werden zu können. Auf dem ECB-Effekt basierende elektrooptische Anzeigeelemente weisen im ausgeschalteten Zustand eine homöotrope oder vertikale Randorientierung, d.h. eine Orientierung weitgehend senkrecht zu den Elektrodenoberflächen, auf.

Neuere Arten von ECB-Anzeigen mit homöotroper Randorientierung sind solche basierend auf dem CSH- oder VA- (vertically aligned) Effekt, wobei letzterer auch unter den Begriffen VAN- (vertically aligned nematic) und VAC- (vertically aligned cholesteric) Effekt bekannt ist. CSH-Anzeigen sind bekannt unter anderem aus H.Hirai, Japan Displays 89 Digest, 184 (1989), J. F. Clerc et al., Japan Displays 89 Digest, 188 (1989) und J. F. Clerc, SID 91 Digest, 758 (1991). VA-Anzeigen wurden u.a. in S. Yamauchi et al., SID Digest of Technical Papers, S. 378ff (1989), VAC-Anzeigen in K. A. Crabdall et al., Appl. Phys. Lett. 65, 4 (1994) beschrieben.

Die neueren VA-Anzeigen enthalten wie die bereits früher bekannten ECB-Anzeigen eine Schicht eines flüssigkristallinen Mediums zwischen zwei transparenten Elektroden, wobei das Flüssigkristallmedium einen negativen Wert der DK-Anisotropie Δε aufweist. Die Moleküle dieser Flüssigkristallschicht sind im ausgeschalteten Zustand homöotrop oder gekippt (engl.: "tilted") homöotrop orientiert. Aufgrund der negativen DK-Anisotropie findet im eingeschalteten Zustand eine Umorientierung der Flüssigkristallmoleküle parallel zu den Elektrodenflächen statt.

In den herkömmlichen ECB-Anzeigen weisen die Flüssigkristallmoleküle im eingeschalteten Zustand üblicherweise eine parallele Orientierung mit einer über die ganze Flüssigkristallzelle einheitlichen Vorzugsrichtung auf. In VA-Anzeigen ist diese einheitliche parallele Ausrichtung dagegen meist nur auf kleine Domänen innerhalb der Zelle beschränkt. Zwischen diesen Domänen, auch als Tilt-Domänen (engl.: tilt domains) bezeichnet, existieren Disklinationen. Solche Anzeigen sind auch unter den Bezeichnungen MVA (multidomain vertically aligned) und PVA (patterned vertically aligned) bekannt. MVA-Anzeigen werden beispielsweise beschrieben in A. Takeda, S. Kataoka, T. Sasaki, H. Chida, H. Tsuda, K. Ohmuro, Y. Koike, T. Sasabayashi and K. Okamoto, "A Super-High-Image-Quality Multi-Domain Vertical Alignment LCD by New Rubbing-Less Technology", SID '98 Digest, pp. 1077-1080, (1998). PVA-Anzeigen werden beispielsweise beschrieben in K. H. Kim, K. Lee, S. B. Park, J. K. Song, S. Kim and J. H. Souk, "Domain Divided Vertical Alignment Mode with Optimized Fringe Field Effect", Proceedings of the International Display Research Conference (Asia Display 1998), pp. 38.

VA-Anzeigen mit tilt-domänen weisen, verglichen mit herkömmlichen ECB-Anzeigen, eine größere Blickwinkelunabhängigkeit des Kontrastes und der Graustufen auf. Außerdem sind solche Anzeigen einfacher herzustellen, da eine zusätzliche Behandlung der Elektrodenoberfläche zur einheitlichen Orientierung der Moleküle im eingeschalteten Zustand, wie z.B. durch Reiben, nicht mehr notwendig ist.

Die Flüssigkristallmedien in VAC-Anzeigen enthalten zusätzlich noch eine oder mehrere chirale Verbindungen, wie z.B. chirale Dotierstoffe, die im eingeschalteten Zustand eine helikale Verdrillung der Flüssigkristallmoleküle in der Flüssigkristallschicht um einen Winkel zwischen 0 und 360° bewirken. Der Verdrillungswinkel beträgt dabei vorzugsweise etwa 90°.

Für Anzeigen mit vertikaler Randorientierung wurde außerdem die Verwendung von Kompensatoren, wie z.B. optisch uniaxial negative Kompensationsfilme, vorgeschlagen, um eine unerwünschte Lichtdurchlässigkeit der Anzeige im ausgeschalteten Zustand unter schrägem Beobachtungswinkel zu kompensieren.

Außerdem ist es möglich, durch eine spezielle Ausgestaltung der Elektroden die Vorzugsrichtung des Kipp- oder Tiltwinkels zu kontrollieren, ohne daß eine zusätzliche Oberflächenbehandlung der Elektroden, wie etwa durch eine Orientierungsschicht, nötig wäre. Eine CSH-Anzeige dieses Typs wird beispielsweise in Yamamoto et al., SID 91 Digest, 762 (1991) beschrieben.

Obwohl die oben beschriebenen VA-Anzeigen, in denen flüssigkristalline Medien mit negativer dielektrischer Anisotropie verwendet werden, relativ kurze Schaltzeiten aufweisen, besteht die Notwendigkeit zu einer weiteren Verkürzung, insbesondere der Graustufenschaltzeiten. Von der Flüssigkristallseite kann hierzu hauptsächlich ein Beitrag durch die Erniedrigung der Rotationsviskosität der FK-Mischungen geleistet werden.

Ein weiteres Problem der VA-Technologie besteht darin, ein "kontrolliertes" Schalten zu erreichen, um das Entstehen störender Disklinationslinien zu vermeiden. Hierzu sind spezielle Techniken notwendig, da durch die verwendeten Orientierungsschichten (zur Orientierung der FK-Moleküle), die üblicherweise Polyimide enthalten, nahezu keine Vorzugsorientierung der FK-Moleküle (sog. "Pretilt") erzeugt werden kann. Beispielsweise wird beim sog. MVA-mode durch Hinzufügen sog. "Protrusions" in der Zelle den Molekülen ein bestimmter Pretilt zugewiesen, oder es wird der sog. "Fringe Field Effekt" ausgenutzt, wie etwa beim PVA-mode.

OCB-Anzeigen beruhen auf einem Doppelbrechungseffekt und enthalten eine Flüssigkristallschicht mit einer sogenannten "bend"-Struktur. Die "bend"-Zelle, auch bekannt als "pi"-Zelle, wurde erstmals von P. Bos et al., SID 83 Digest, 30 (1983) für eine elektrisch kontrollierbare λ/2-Platte vorgeschlagen, während der OCB-Modus für Anzeigen von Y. Yamaguchi, T. Miyashita und T. Uchida, SID 93 Digest, 277 (1993), und danach in Arbeiten von T. Miyashita et al. in, u.a., Proc. Eurodisplay, 149 (1993), J.Appl.Phys. 34, L177 (1995), SID 95 Digest, 797 (1995), und C.-L. Kuo et al., SID 94 Digest, 927 (1994) beschrieben wurde. Eine OCB-Zelle enthält eine Flüssigkristallzelle mit "bend"-Orientierung und ein Flüssigkristallmedium mit positiver Δε. Darüber hinaus enthalten die aus den oben genannten Dokumenten bekannten OCB-Anzeigen einen oder mehrere doppelbrechende optische Retardationsfilme, um unerwünschte Lichtdurchlässigkeit der "bend"-Zelle im dunklen Zustand zu vermeiden. OCB-Anzeigen besitzen gegenüber den üblichen Anzeigen, die auf verdrillten nematischen ("twisted nematic", TN) Zellen beruhen, mehrere Vorteile, wie zum Beispiel einen weiteren Blickwinkel und kürzere Schaltzeiten.

Die oben beschriebenen Anzeigen können vom Aktivmatrix- oder Passivmatrix-(Multiplex-)Typ sein. So wurden beispielsweise ECB- und VA-Anzeigen beschrieben, die als Aktivmatrix- oder Multiplex-Anzeigen betrieben werden, während CSH-Anzeigen üblicherweise als Multiplex-Flüssigkristall-Anzeigen (MFK) betrieben werden.

Es hat sich jedoch gezeigt, daß mit den bisher zur Verfügung stehenden FK-Materialien noch keine ausreichende Optimierung der elektrooptischen Eigenschaften von VA-Anzeigen möglich ist.

Bei der Weiterentwicklung von FK-Materialien für die oben genannten Anzeigen, insbesondere für Monitor- und TV-Anwendungen, steht vor allem eine Verkürzung der Schaltzeiten im Vordergrund. Einen sehr wichtigen Aspekt stellt dabei eine Minimierung der Rotationsviskosität der verwendeten FK-Mischung dar. Dabei ist im Allgemeinen die Verwendung von mesogenen Substanzen mit Alkenyl-Endketten von Vorteil. Zum Anderen hat sich der Zusatz von polymerisierbaren mesogenen oder flüssigkristallinen Verbindungen, auch als "reaktive Mesogene" (RM) bezeichnet, zur FK-Mischung, mit anschließender Polymerisierung im Display, als erfolgversprechend erwiesen. Solche Anzeigen sind im Stand der Technik auch unter der Bezeichnung PSA (polymer sustained alignment) bekannt. Hierbei sind insbesondere zwei Anwendungen zu erwähnen, und zwar die sogenannten PSA-VA (vertically aligned) Anzeigen und die PSA-OCB (optically aligned bend) Anzeigen. Beide Anzeigen haben gemein, dass geringe Mengen RM (typischerweise < 1 Gew. %) zugesetzt werden, und der Polymerisationsvorgang bei angelegter Spannung in der Anzeige durchgeführt wird. Bei PSA-VA-Anzeigen kann man ohne nennenswerte Verschlechterung sonstiger Parameter eine Verkürzung der Schaltzeiten erreichen, die mit einem in Testzellen messbaren Pretilt korrelieren. Bei PSA-OCB-Anzeigen kann man durch Zusatz von RMs erreichen, dass die Bend-Struktur stabilisiert wird, so dass man ohne Offset-Spannung auskommt oder diese reduzieren kann.

PSA-VA-Anzeigen enthaltend FK-Mischungen und RMs sind z.B. in EP 1 170 626 A2, EP 1 378 557 A1, EP 1 498 468 A1 und US 2004/0191428 A1 beschrieben. Es hat sich jedoch gezeigt, dass die aus dem Stand der Technik bekannten FK-Mischungen bei Verwendung in PSA-Anzeigen in Kombination mit RMs noch einige Nachteile aufweisen. Beispielsweise kann man in Testzellen von PSA-VA-Anzeigen keinen nennenswerten Pretilt erzeugen. Doch gerade die Kombination von FK-Mischungen mit besonders niedriger Rotationsviskosität und RMs würde den strukturbedingten Vorteil von PSA-VA-Anzeigen erst wirklich zur Geltung bringen.

GB 2 379 931 A beschreibt reaktive Mesogene zur Verwendung in Polymerfilmen oder FK-Anzeigen, enthält aber keinen Hinweis auf geeignete FK-Mischungen für PSA-Anzeigen. DE 10 2005 027763 A1 beschreibt FK-Mischungen mit positiver dielektrischer Anisotropie, die auch Verbindungen mit nicht-endständigen Alkenylgruppen enthalten können, enthält aber keinen Hinweis auf PSA-Anzeigen.

Es besteht somit immer noch ein großer Bedarf nach PSA-FK-Anzeigen, insbesondere vom VA- und OCB-Typ, mit sehr hohem spezifischen Widerstand bei gleichzeitig großem Arbeitstemperatur-bereich, kurzen Schaltzeiten auch bei tiefen Temperaturen und niedriger Schwellenspannung, die eine Vielzahl von Graustufen, einen hohen Kontrast und einen weiten Blickwinkel ermöglichen, niedrige Werte der "voltage holding ratio" (HR) nach UV-Belastung aufweisen und die oben beschriebenen Nachteile nicht oder nur in geringem Maße zeigen.

Der Erfindung lag somit die Aufgabe zugrunde, PSA-FK-Anzeigen bereitzustellen, die die oben angegebenen Nachteile nicht oder nur in geringerem Maße aufweisen, die Einstellung eines Pretilt-Winkels ermöglichen und vorzugsweise gleichzeitig sehr hohe spezifische Widerstände, niedrige Schwellenspannungen und niedrige Schaltzeiten besitzen.

Es wurde nun gefunden, daß diese Aufgabe gelöst werden kann, wenn man in FK-Anzeigen erfindungsgemäße Medien verwendet. Insbesondere wurde überraschend gefunden, dass bei Verwendung von FK-Mischungen enthaltend Alkenylverbindungen mit nicht-endständiger Doppelbindung nur eine geringe Beeinflussung des Polymerisationsverhaltens der RMs auftritt. So wurde bei Verwendung von erfindungsgemäßen VA-Mischungen (enthaltend Alkenylverbindungen mit nicht-endständiger Doppelbindung) in Testzellen nur eine leicht reduzierter Pretilt-Winkel im Vergleich zu alkenylfreien Mischungen festgestellt, während bei VA-Mischungen enthaltend Alkenylverbindungen mit endständiger Doppelbindung kein Pretilt mehr messbar war. Wie oben erwähnt ist ein Pretilt jedoch erwünscht, um kürzere Schaltzeiten erzielen zu können.

Gegenstand der Erfindung ist somit ein flüssigkristallines Medium, dadurch gekennzeichnet, daß es eine oder mehrere polymerisierbare Verbindungen und eine oder mehrere Verbindungen der Formel I enthält 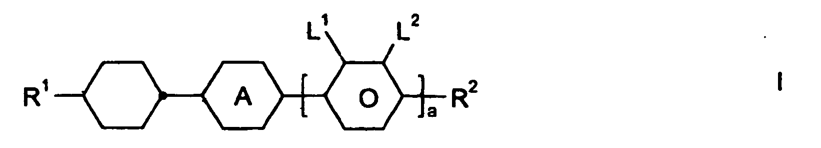 worin die einzelnen Reste folgende Bedeutung besitzen 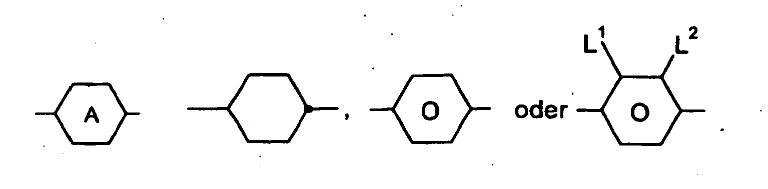
- a: 0 oder 1,
- L¹ und L²: jeweils unabhängig voneinander H, F oder Cl,
- R¹: bei jedem Auftreten gleich oder verschieden -(CH₂)ₘ-CH=CH-CₙH₂ₙ+₁,
- R²: Alkyl mit 1 bis 12 C-Atomen, worin auch ein oder zwei nicht benachbarte CH₂-Gruppen durch -O-, -CH=CH-, -CO-, -OCO- oder -COO- so ersetzt sein können, daß O-Atome nicht direkt miteinander verknüpft sind, und endständige -CH=CH₂-Gruppen ausgeschlossen sind, oder, falls a=0 ist und der Ring A Cyclohexylen bedeutet, auch R¹,
- m: bei jedem Auftreten gleich oder verschieden 0, 1, 2, 3, 4 oder 5 bedeutet,
- n: bei jedem Auftreten gleich oder verschieden 1, 2, 3, 4, 5 oder 6 bedeutet, wobei n+m ≤ 6 ist.

Ein weiterer Gegenstand der Erfindung ist eine elektrooptische Anzeige, insbesondere eine Anzeige basierend auf dem VA-, MVA-, PSA-VA-, OCB-, PSA-OCB-, DAP-, ECB- oder CSH-Effekt, dadurch gekennzeichnet, daß sie als Dielektrikum ein flüssigkristallines Medium wie oben beschrieben enthält, insbesondere eine Anzeige mit Aktivmatrix-Adressierung.

Besonders bevorzugt sind Verbindungen der Formel 1, worin m 0 ist. Ferner bevorzugt sind Verbindungen der Formel 1, worin n 1, 2 oder 3 ist.

R² ist vorzugsweise geradkettiges Alkyl oder Alkoxy mit 1 bis 8 C-Atomen, besonders bevorzugt Methoxy, Ethoxy, n-Propoxy oder n-Butoxy.

Weitere bevorzugte Verbindungen der Formel I sind solche, worin L¹ und L² F bedeuten, solche, worin L¹ und L² H bedeuten, sowie solche, worin L¹ Cl und L² F bedeuten.

Die Verbindungen der Formel I sind vorzugsweise ausgewählt aus den folgenden Formeln: 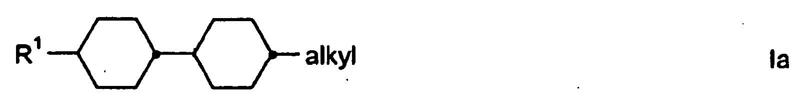 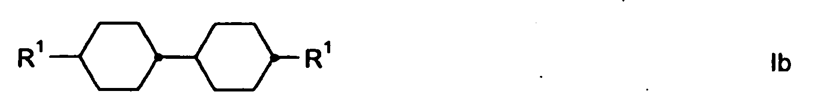 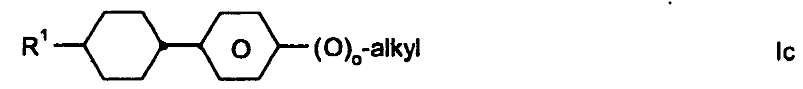 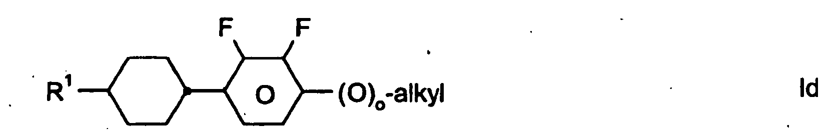 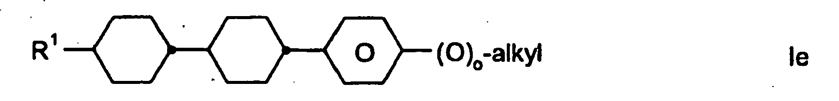 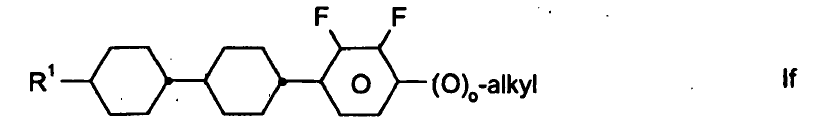 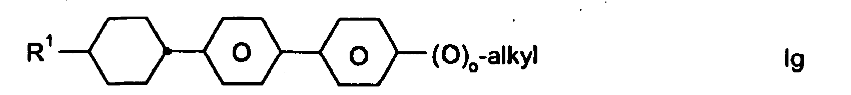 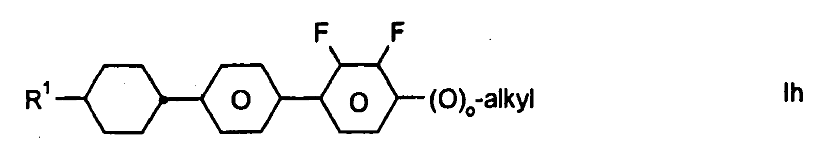 worin R¹ bei jedem Auftreten gleich oder verschieden die oben angegebene Bedeutung besitzt, o 0 oder 1 ist, und "alkyl" C₁₋₆-alkyl, welches vorzugsweise geradkettig ist, bedeutet. Besonders bevorzgt sind Verbindungen der Formeln Ia, Id, Ie, If, Ih.

In einer bevorzugten Ausführungsform der Erfindung sind die polymerisierbaren Verbindungen reaktive Mesogene (RM) ausgewählt aus Formel I*1:

P¹-Sp¹-X¹-A¹-(Z¹-A²)ₘ-R I*1

worin
- R: H, F, Cl, CN, SCN, SF₅H, NO₂, geradkettiges oder verzweigtes Alkyl mit 1 bis 12 C-Atomen, wobei auch ein oder zwei nicht benachbarte CH₂-Gruppen durch -O-, -S-, -CH=CH-, -CO-, -OCO-, -COO-, -O-COO-, -S-CO-, -CO-S- oder -C≡C- so ersetzt sein können, daß O- und/oder S-Atome nicht direkt miteinander verknüpft sind, oder -X²-Sp²-P²,
- P¹ und P²: jeweils unabhängig voneinander eine polymerisierbare Gruppe,
- Sp¹ und Sp²: jeweils unabhängig voneinander eine Abstandshaltergruppe oder eine Einfachbindung,
- X¹ und X²: jeweils unabhängig voneinander -O-, -S-, -OCH₂-, -CH₂O-, -CO-, -COO-, -OCO-, -OCO-O-, -CO-NR⁰-, -NR⁰-CO-, -OCH₂-, -CH₂O-, -SCH₂-, -CH₂S-, -CH=CH-COO-, -OOC-CH=CH- oder eine Einfachbindung,
- A¹ und A²: jeweils unabhängig voneinander 1,4-Phenylen, worin auch eine oder mehrere CH-Gruppen durch N ersetzt sein können, 1,3- oder 1,4-Cyclohexylen, worin auch eine oder mehrere nicht benachbarte CH₂-Gruppen durch O und/oder S ersetzt sein können, 1,4-Cyclohexenylen, 1,4-Bicyclo-(2,2,2)-octylen, Piperidin-1,4-diyl, Naphthalin-2,6-diyl, Decahydronaphthalin-2,6-diyl, 1,2,3,4-Tetrahydronaphthalin-2,6-diyl, Indan-2,5-diyl, Octahydro-4,7-methano-indan-2,5-diyl, wobei alle diese Gruppen unsubstituiert oder durch L ein- oder mehrfach substituiert sein können,
- L: F, Cl, CN oder Alkyl, Alkoxy, Alkylcarbonyl, Alkoxycarbonyl oder Alkylcarbonyloxy mit 1 bis 7 C-Atomen, worin auch ein oder mehrere H-Atome durch F oder Cl ersetzt sein können,
- Z¹: -O-, -S-, -CO-, -COO-, -OCO-, -O-COO-, -OCH₂-, -CH₂O-, SCH₂-, -CH₂S-, -CF₂O- -OCF₂-, -CF₂S-, -SCF₂-, -CH₂CH₂-, -CF₂CH₂-, -CH₂CF₂-, -CF₂CF₂-, -CH=CH-, -CF=CF-, -C=C-, -CH=CH-COO-, -OCO-CH=CH-, CR⁰R⁰⁰ oder eine Einfachbindung,
- R⁰ und R⁰⁰: jeweils unabhängig voneinander H oder Alkyl mit 1 bis 4 C-Atomen, und
- m: 0, 1 oder 2
bedeuten.

R ist vorzugsweise Alkyl oder Alkoxy mit 1 bis 12 C-Atomen oder -X²-Sp²-P², besonders bevorzugt -X²-Sp²-P².

P¹ und P² bedeuten vorzugsweise Acrylat, Methacrylat, Vinyl, Vinyloxy, Propenylether oder Epoxy, besonders bevorzugt Acrylat oder Methacrylat.

Geeignete Abstandshaltergruppen Sp¹ und Sp² (engl. "spacer") sind dem Fachmann bekannt und in der Literatur beschrieben. Sp¹ und Sp² bedeuten vorzugsweise geradkettiges oder verzweigtes Alkylen mit 1 bis 8-Atomen. Besonders bevorzugt sind Verbindungen der vor- und nachstehenden Formeln worin Sp¹-X¹ und Sp²-X² eine Einfachbindung bedeuten.

A¹ und A² bedeuten vorzugsweise 1,4-Cyclohexylen oder unsubstituiertes oder durch L ein- oder mehrfach substituiertes 1,4-Phenylen oder Naphthalin-2,6-diyl.

L ist, bei jedem Auftreten gleich oder verschieden, vorzugsweise F, Cl, CN, NO₂, CH₃, C₂H₅, OCH₃, OC₂H₅, COCH₃, COC₂H₅, COOCH₃, COOC₂H₅, CF₃, OCF₃, OCHF₂ oder OC₂F₅, besonders bevorzugt F, CI, CN, CH₃, C₂H₅, OCH₃, COCH₃ oder OCF₃, insbesondere F, Cl, CH₃, OCH₃ oder COCH₃.

Z ist vorzugsweise -COO-, -OCO- oder eine Einfachbindung, ferner CH₂, CH(CH₃), C(CH₃)₂ oder CF₂CF₂.

Besonders bevorzugt sind polymerisierbare Verbindungen ausgewählt aus den folgenden Formeln: 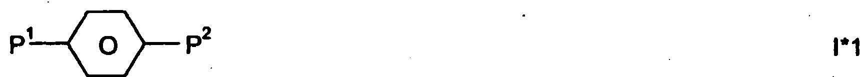 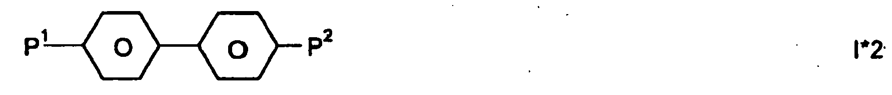 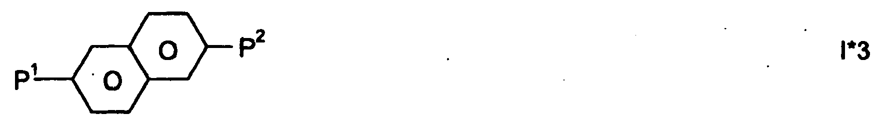 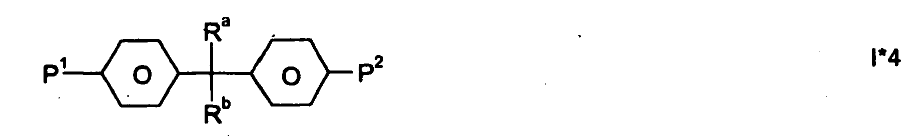 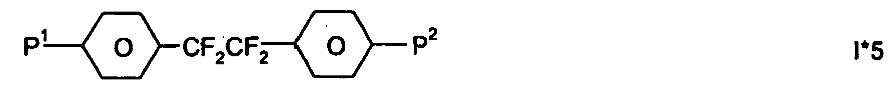 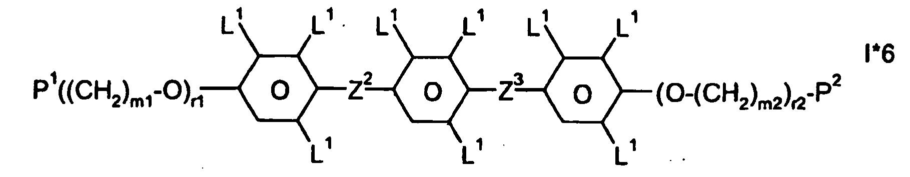 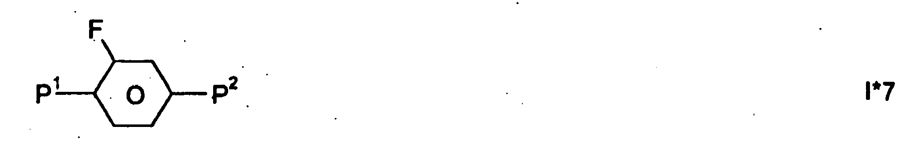 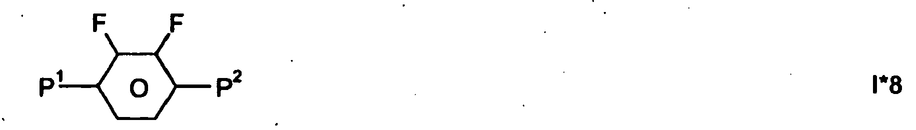 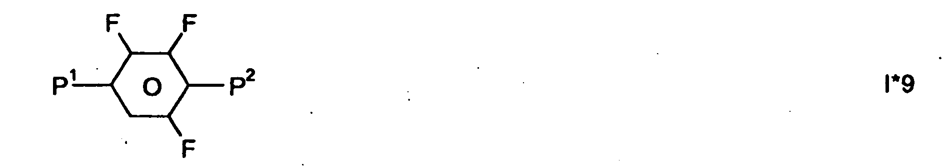 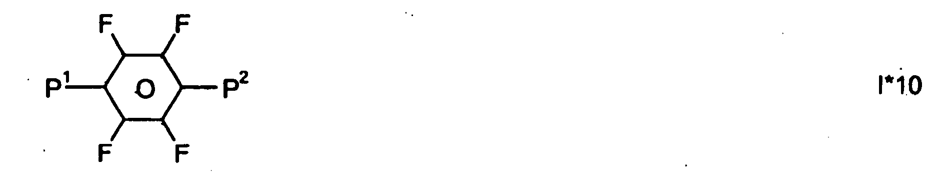 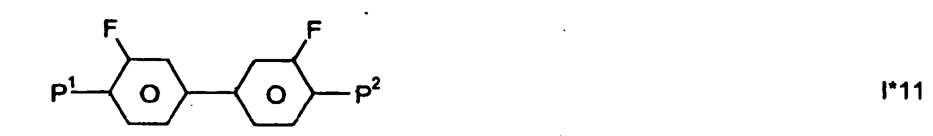 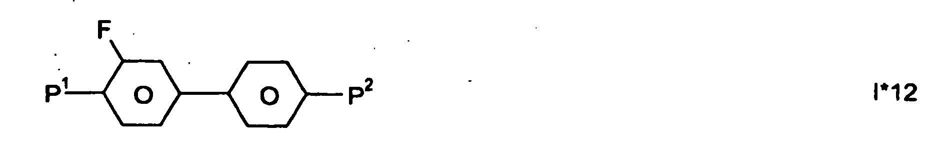 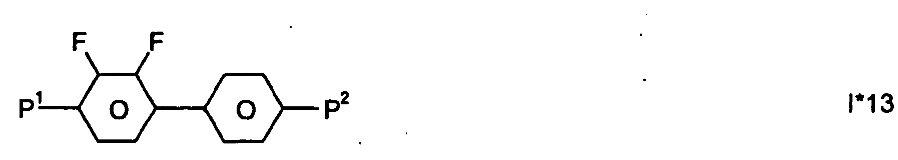 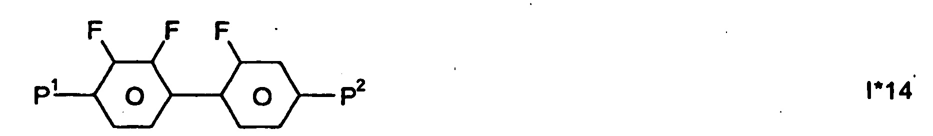 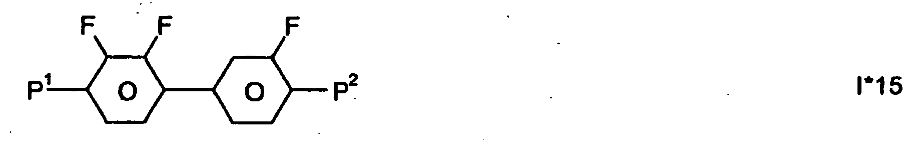 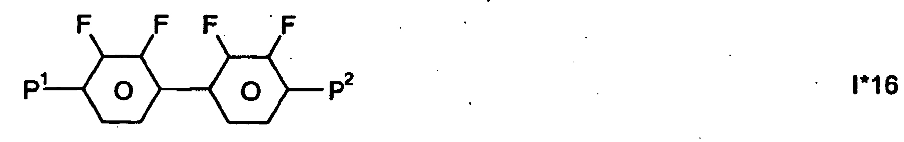 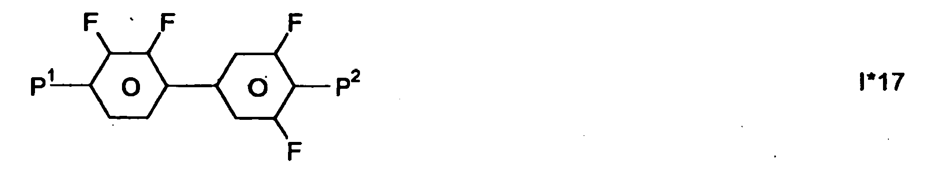 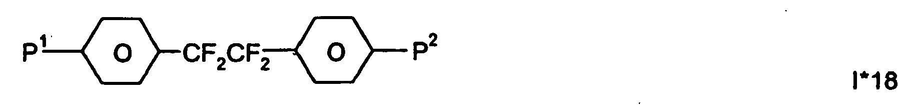 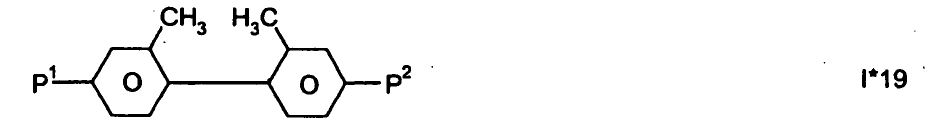 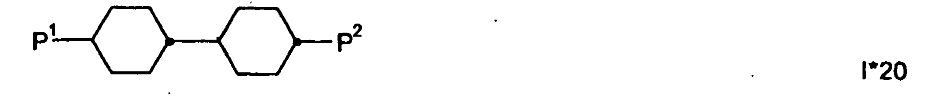 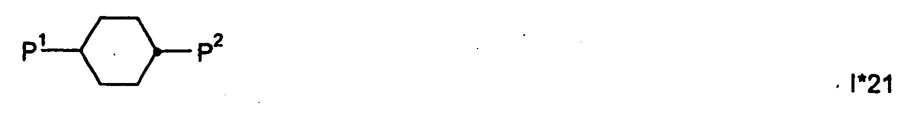 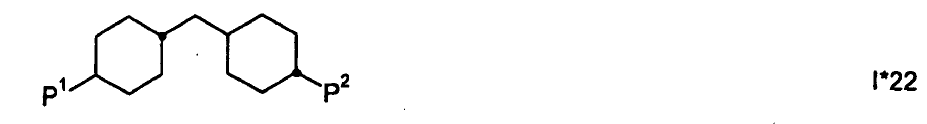 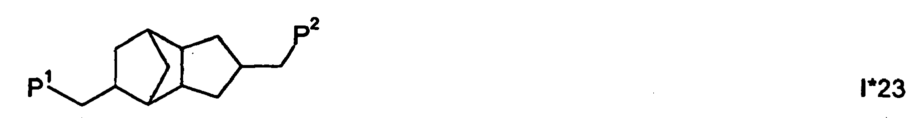 worin P¹ und P² die oben angegebene Bedeutung besitzen und vorzugsweise Acrylat oder Methacrylat bedeuten, Z² und Z³ jeweils unabhängig voneinander eine der für Z¹ angegebenen Bedeutungen besitzen und vorzugsweise -COO- oder -OCO bedeuten, L¹ H oder L bedeutet, m1 und m2 jeweils unabhängig voneinander 1 bis 8 bedeuten, r1 und r2 jeweils unabhängig voneinander 0 oder 1, vorzugsweise 0 bedeuten, und R^{a} und R^{b} jeweils unabhängig voneinander H oder CH₃ bedeuten.

Die Phenylringe in Formel I*1 bis I*5 können auch in 2-, 3- und/oder 5-Position durch L wie oben definiert substituiert sein.

Besonders bevorzugt sind Verbindungen der Formel I*1, I*2, I*3 und I*4.

Ferner bevorzugt sind Verbindungen der Formel I*1 bis I*23, worin P¹ und P² Acrylat oder Methacrylat bedeuten.

In einer weiteren bevorzugten Ausführungsform der Erfindung sind die polymerisierbaren Verbindungen chirale Verbindungen ausgewählt aus Formel II*:

(R-(A¹-Z¹)ₘ)ₖ-Q ll*

worin
- R: bei jedem Auftreten gleich oder verschieden eine der für R in Formel I* angegebenen Bedeutungen besitzt, und mindestens ein Rest R P²-Sp²-X²- bedeutet,
- P², Sp², X², A¹, Z¹ und n: bei jedem Auftreten gleich oder verschieden eine der in Formel I* angegebenen Bedeutungen besitzen,
- Q: eine ein- oder mehrbindige chirale Gruppe bedeutet und
- k: 1, 2, 3, 4, 5 oder 6 ist.

Bevorzugte einbindige chirale Gruppen Q sind beispielsweise Binaphthylreste der Formel III* 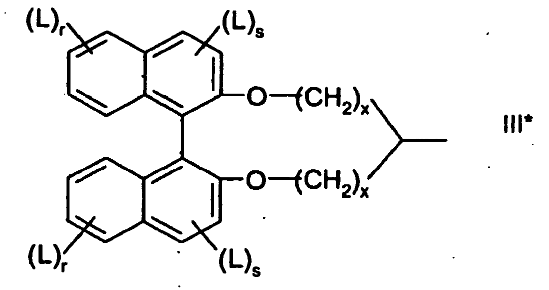 worin L bei jedem Auftreten gleich oder verschieden die oben angegebene Bedeutung besitzt, und auch P¹-Sp¹-X¹ bedeuten kann
- r: bei jedem Auftreten gleich oder verschieden 0, 1, 2, 3 oder 4,
- s: bei jedem Auftreten gleich oder verschieden 0, 1 oder 2,
- x: bei jedem Auftreten gleich oder verschieden 0, 1 oder 2
bedeutet. Besonders bevorzugt sind Gruppen der Formel III*, worin x 1 oder 2 bedeutet.

Weitere bevorzugte einbindige chirale Gruppen Q sind solche der Formel IV* 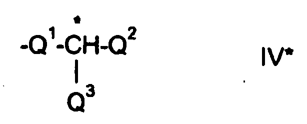 worin
- Q¹: Alkylen oder Alkylenoxy mit 1 bis 9 C-Atomen oder eine Einfachbindung,
- Q²: optional fluoriertes Alkyl oder Alkoxy mit 1 bis 10 C-Atomen, worin auch ein oder zwei nicht benachbarte CH₂-Gruppen durch -O-, -S-, -CH=CH-, -CO-, -OCO-, -COO-, -O-COO-, -S-CO-, -CO-S- oder -C≡C- so ersetzt sein können, daß O- und/oder S-Atome nicht direkt miteinander verknüpft sind,
- Q³: F, Cl, CN oder Alkyl oder Alkoxy wie für Q² definiert, aber von Q² verschieden
bedeuten.

Bevorzugte Gruppen der Formel IV* sind beispielsweise 2-butyl (=1-methylpropyl), 2-methylbutyl, 2-methylpentyl, 3-methylpentyl, 2-ethylhexyl, 2-propylpentyl, in particular 2-methylbutyl, 2-methylbutoxy, 2-methylpentoxy, 3-methylpentoxy, 2-ethylhexoxy, 1-methylhexoxy, 2-octyloxy, 2-oxa-3-methylbutyl, 3-oxa-4-methylpentyl, 4-methylhexyl, 2-hexyl, 2-octyl, 2-nonyl, 2-decyl, 2-dodecyl, 6-methoxyoctoxy, 6-methyloctoxy, 6-methyloctanoyloxy, 5-methylheptyloxycarbonyl, 2-methylbutyryloxy, 3-methylvaleroyloxy, 4-methylhexanoyloxy, 2-chlorpropionyloxy, 2-chloro-3-methylbutyryloxy, 2-chloro-4-methylvaleryloxy, 2-chloro-3-methylvaleryloxy, 2-methyl-3-oxapentyl, 2-methyl-3-oxahexyl, 1-methoxypropyl-2-oxy, 1-ethoxypropyl-2-oxy, 1-propoxypropyl-2-oxy, 1-butoxypropyl-2-oxy, 2-fluorooctyloxy, 2-fluorodecyloxy, 1,1,1-trifluoro-2-octyloxy, 1,1,1-trifluoro-2-octyl, 2-fluoromethyloctyloxy.

Bevorzugte zweibindige chirale Gruppen Q sind beispielsweise ausgewählt aus folgenden Strukturen: 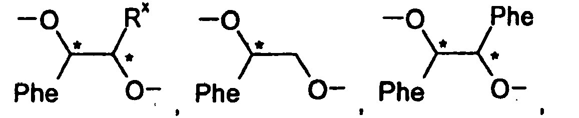 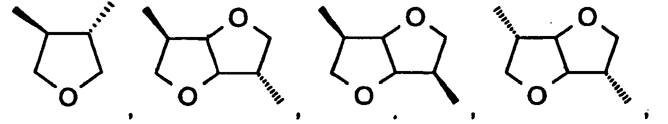 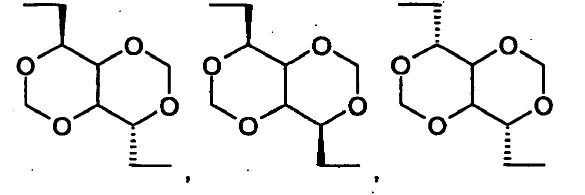 oder 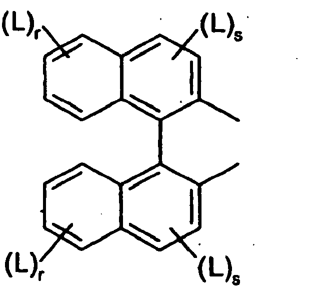 worin Phe phenyl bedeutet, welches optional durch L ein- oder mehrfach substituiert ist, R^{x} F oder optional fluoriertes Alkyl mit 1 bis 4 C-Atomen und L bei jedem Auftreten gleich oder verschieden die oben angegebene Bedeutung besitzt, und auch P¹-Sp¹-X¹ bedeuten kann.

Besonders bevorzugt sind polymerisierbare Verbindungen der folgenden Formel: 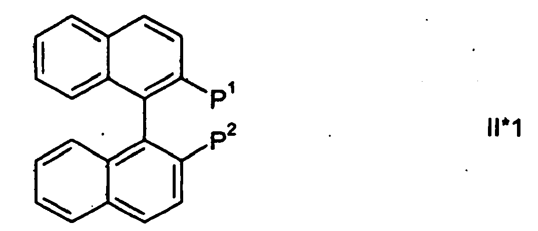 worin P¹ und P² die oben angegebene Bedeutung besitzen und vorzugsweise Acrylat oder Methacrylat bedeuten.

Die polymerisierbaren Verbindungen werden vorzugsweise durch Photopolymerisation, z.B. durch UV-Bestrahlung polymerisiert. Dabei können ggf. auch ein oder mehrere Initiatoren zugesetzt werden. Geeignete Bedingungen für die Polymerisation sowie geeignete Arten und Mengen der Initiatoren sind dem Fachmann bekannt und in der Literatur beschrieben. Für die radikalische Polymerisation eignen sich z.B. die kommerziell erhältlichen Photoinitiatoren Irgacure651®, Irgacure184®, oder Darocure1173® (Ciba Geigy AG). Falls ein Initiator eingesetzt wird, beträgt dessen Anteil im Gesamtgemisch vorzugsweise 0,001 bis 5 Gew.-%, besonders bevorzugt 0,005 bis 1 Gew.-%. Die Polymerisation kann aber auch ohne Zusatz eines Initiators erfolgen.

Die Kombination von Verbindungen der Formel I und II mit polymerisierbaren Verbindungen, insbesondere solchen der Formel I*, bewirkt in den erfindungsgemäßen Medien niedrige Schwellenspannungen, niedrige Rotationsviskositäten und sehr gute Tieftemperaturstabilitäten bei gleichbleibend hohen Klärpunkten und hohen HR-Werten, und erlaubt die Einstellung eines Pretilt-Winkels in VA-Anzeigen. Insbesondere zeigen die FK-Medien in VA-Anzeigen im Vergleich zu den Medien aus dem Stand der Technik deutlich verringerte Schaltzeiten, insbesondere auch der Graustufenschaltzeiten.

Einige bevorzugte Ausführungsformen werden im folgenden genannt:
a) Medium, welches zusätzlich eine oder mehrere Verbindungen der Formel II und/oder enthält: 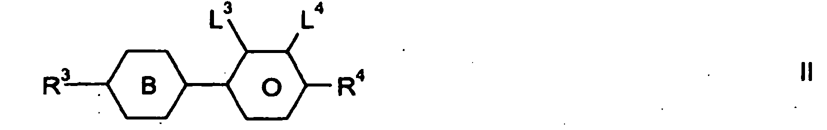 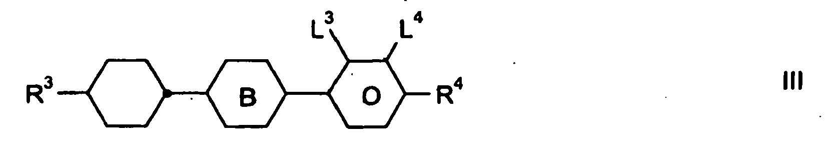 worin L³ und L⁴ jeweils unabhängig voneinander F oder Cl,
   - R³ und R⁴: jeweils unabhängig voneinander Alkyl mit 1 bis 12 C-Atomen, wobei auch ein oder zwei nicht benachbarte CH₂-Gruppen durch -O-, -CH=CH-, -CO-, -OCO- oder -COO- so ersetzt sein können, daß O-Atome nicht direkt miteinander verknüpft sind, und 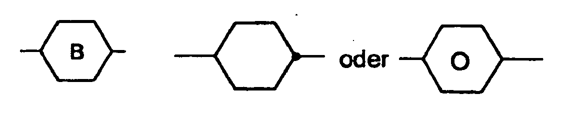
   bedeuten. Vorzugsweise bedeuten L³ und L⁴ F, oder L³ Cl und L⁴ F.
   Die Verbindungen der Formel II und III sind vorzugsweise ausgewählt aus den folgenden Formeln 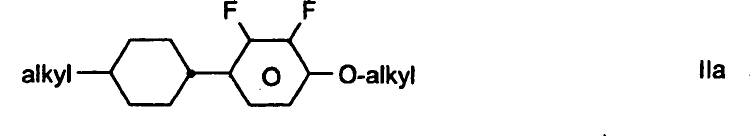 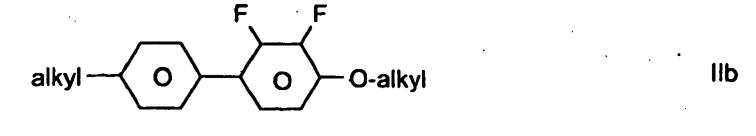 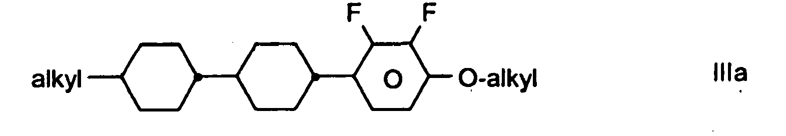 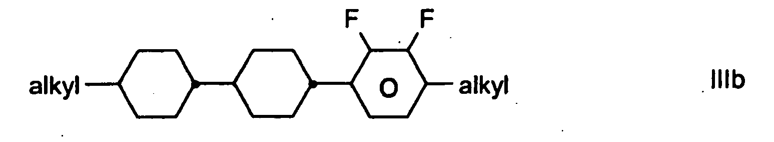 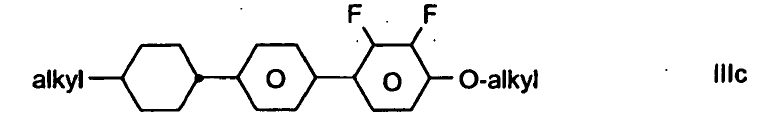 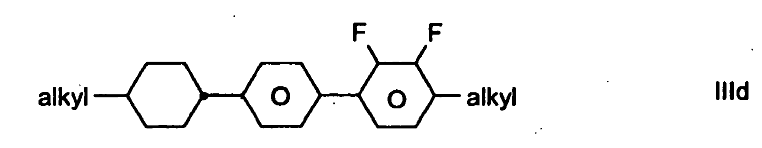 worin "alkyl" C₁₋₆-alkyl bedeutet.
b) Medium, welches zusätzlich eine oder mehrere Verbindungen der Formel IV enthält: 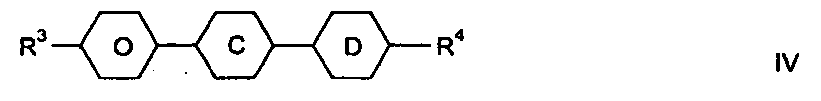 worin R³ und R⁴ jeweils unabhängig voneinander eine der in Formel II angegebenen Bedeutungen besitzen und 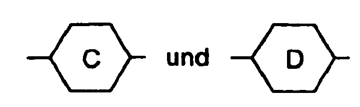 jeweils unabhängig voneinander 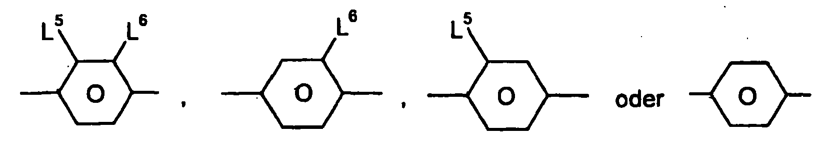 bedeuten, worin L⁵ und L⁶ F oder Cl, vorzugsweise F, bedeuten.
   Die Verbindungen der Formel IV sind vorzugsweise ausgewählt aus den folgenden Formeln 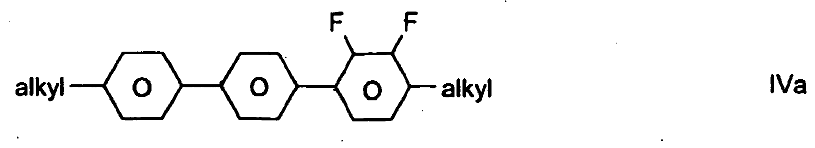 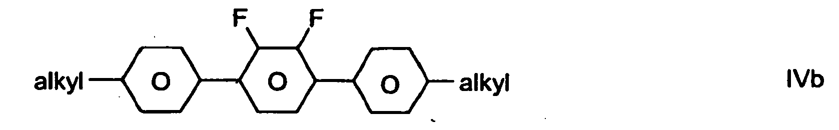 worin "alkyl" C₁₋₆-alkyl bedeutet.
c) Medium, welches zusätzlich eine oder mehrere Verbindungen ausgewählt aus den Formeln Va und Vb enthält: 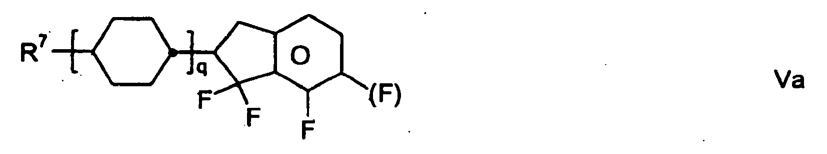 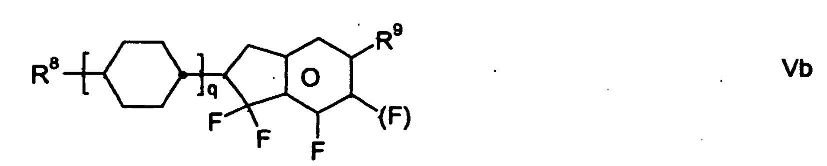 worin R⁷ und R⁸ jeweils unabhängig voneinander eine der für R³ angegebenen Bedeutungen haben, R⁹ CH₃, C₂H₅ oder n-C₃H₇ und q 1 oder 2 bedeutet.
d) Medium, welches zusätzlich eine oder mehrere Verbindungen enthält, die eine Tetrahydronaphthyl- oder Naphthyl-Einheit aufweisen, wie z.B. die Verbindungen der folgenden Formeln ausgewählt aus den Formeln: 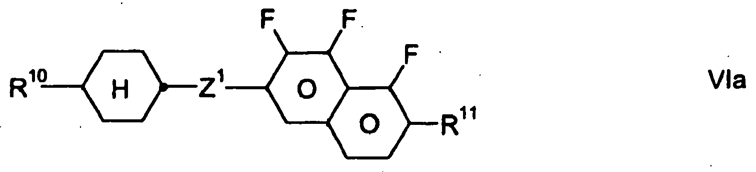 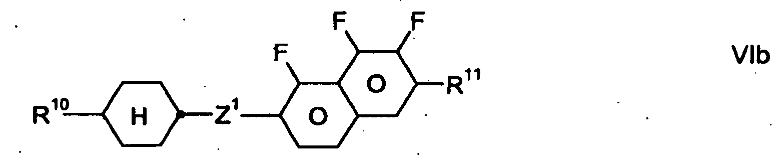 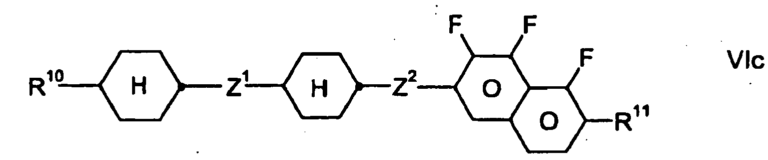 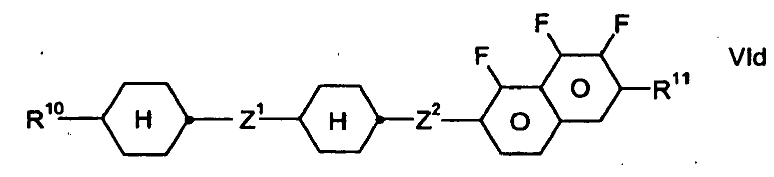 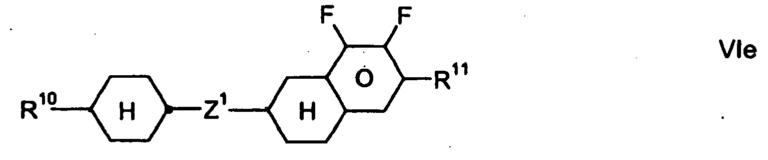 worin R¹⁰ und R¹¹ jeweils unabhängig voneinander eine der für R³ angegebenen Bedeutungen haben, vorzugsweise geradkettiges Alkyl, geradkettiges Alkoxy oder geradkettiges Alkenyl bedeuten, und Z, Z¹und Z² jeweils unabhängig voneinander -C₂H₄-, -CH=CH-, -(CH₂)₄-, -(CH₂)₃O-, -O(CH₂)₃-, -CH=CHCH₂CH₂-, -CH₂CH₂CH=CH-, -CH₂O-, -OCH₂-, -COO-, -OCO-, -C₂F₄-, -CF=CF-, -CF=CH-, -CH=CF-, -CH₂- oder eine Einfachbindung bedeuten.
e) Medium, welches zusätzlich eine oder mehrere Verbindungen der Formel VII enthält: 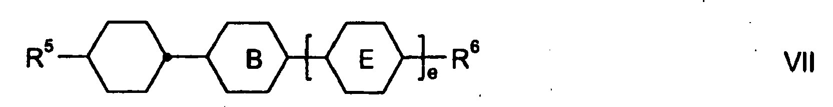 worin
   - R⁵ und R⁶: unabhängig voneinander eine der für R³ in Formel II angegebenen Bedeutungen haben, 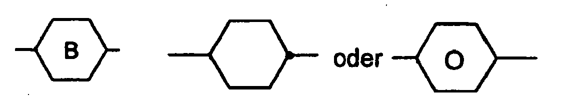 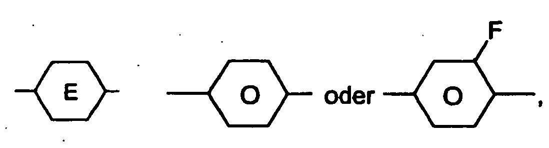 und
   - e: 0 oder 1 bedeuten.
   Die Verbindungen der Formel VII sind vorzugsweise ausgewählt aus den folgenden Formeln: 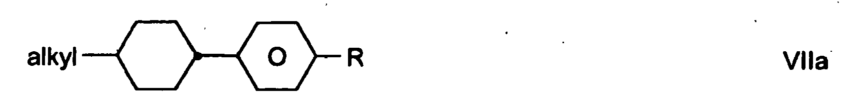 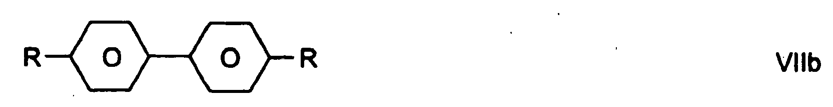 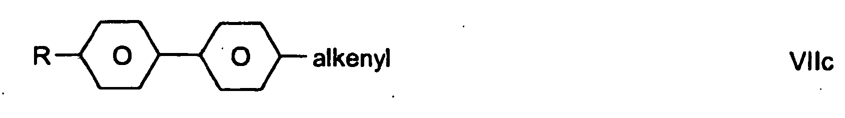 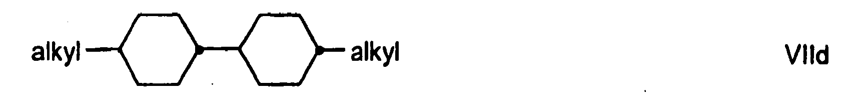 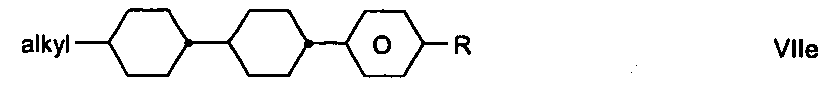 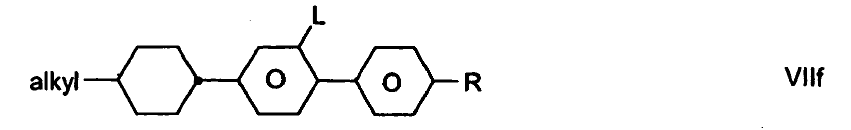 worin "alkyl" C₁₋₆-alkyl, R C₁₋₆-alkyl oder -alkoxy, "alkenyl" C₂₋₇-alkenyl und L H oder F bedeuten.
f) Medium, welches zusätzlich eine oder mehrere Verbindungen ausgewählt aus den Formeln VIIIa bis VIIId enthält: 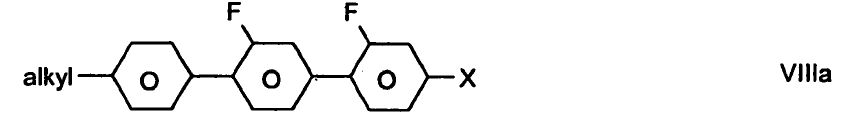 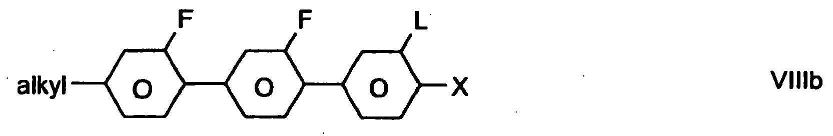 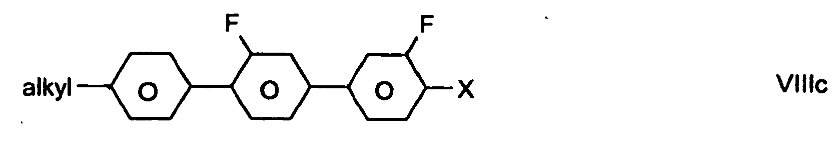 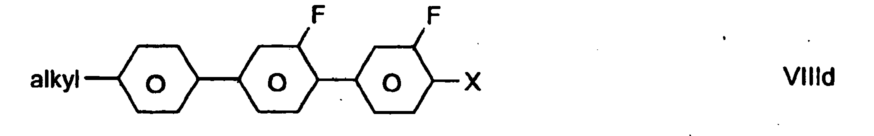 worin "alkyl" C₁₋₆-alkyl, L H oder F und X F oder Cl bedeuten.
   Besonders bevorzugt sind Verbindungen der Formel Vllla, worin X F bedeutet.
g) Medium, welches zusätzlich eine oder mehrere Verbindungen ausgewählt aus den folgenden Formeln enthält: 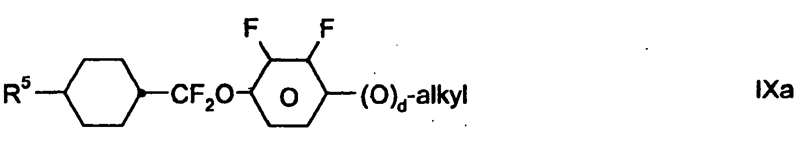 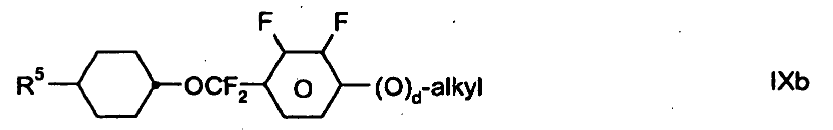 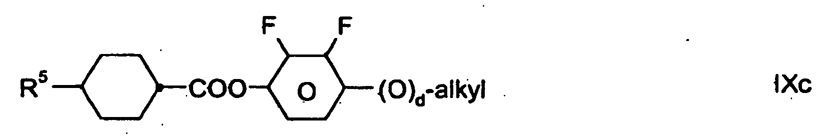 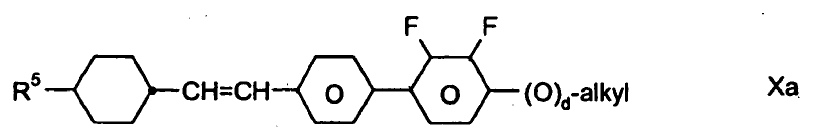 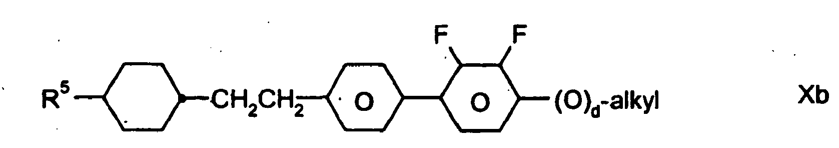 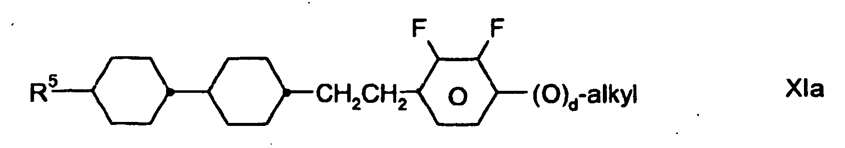 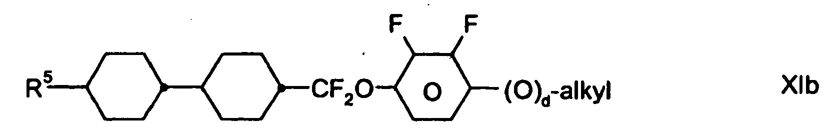 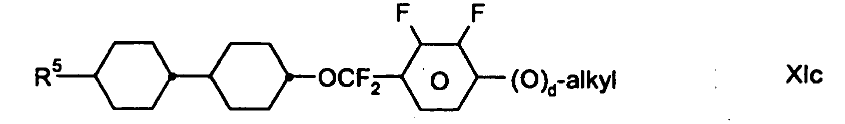 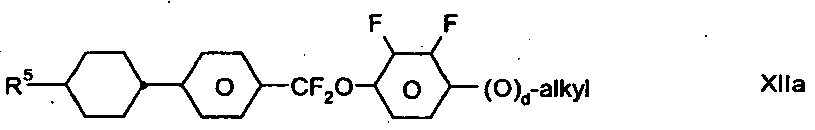 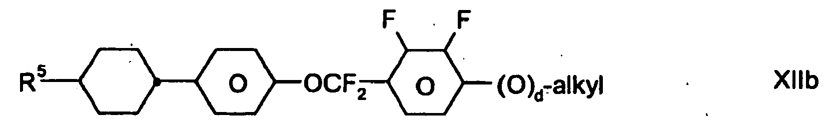 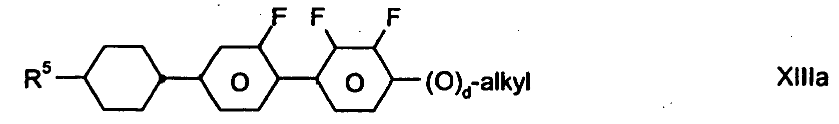 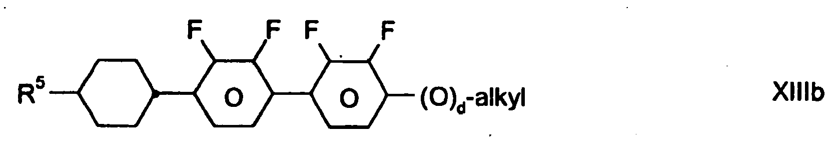 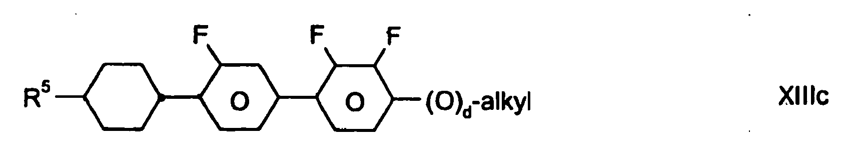 worin R⁵ und "alkyl" die oben angegebenen Bedeutungen besitzen und d 0 oder 1 bedeutet. R⁵ ist in diesen Verbindungen besonders bevorzugt C₁₋₆-alkyl oder -alkoxy, d ist vorzugsweise 1. Besonders bevorzugt sind Verbindungen der Formel Xb und Xlb.
h) Medium, welches zusätzlich eine oder mehrere Verbindungen der Formel XIV und/oder XVenthält: 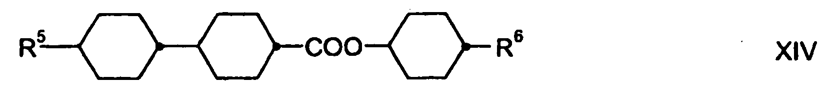 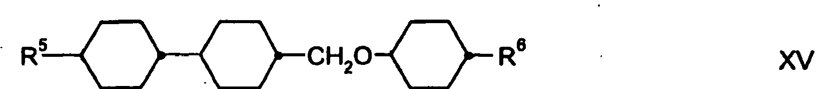 worin R⁵ und R⁶ die oben angegebenen Bedeutungen besitzen und vorzugsweise Alkyl mit 1 bis 8 C-Atomen bedeuten.
i) Medium, welches außer den polymerisierbaren Verbindungen der Formel I* oder II* keine Verbindungen enthält, die eine Alkenylseitenkette mit einer endständigen Vinylgruppe (-C=CH₂-Gruppe) aufweisen.
k) Medium, welches 1 bis 4, vorzugsweise 1 oder 2 Verbindungen der Formel I und 1 bis 3, vorzugsweise 1 oder 2 polymerisierbare Verbindungen enthält.
l) Medium, welches 1 bis 3, vorzugsweise 1 oder 2 polymerisierbare Verbindungen der Formel I* oder II*, insbesondere I*1, I*2, I*3 oder II*1 enthält.
m) Medium, welches 1 bis 8, vorzugsweise 1 bis 5 Verbindungen der Formel II enthält, insbesondere Verbindungen der Formel lla und/oder llb. Der Anteil an Verbindungen der Formel II im Gesamtgemisch beträgt vorzugsweise 5 bis 60 %, besonders bevorzugt 10 bis 35 %. Der Gehalt der einzelnen Verbindungen der Formel ii beträgt vorzugsweise jeweils 2 bis 20 %.
n) Medium, welches 1 bis 10, vorzugsweise 1 bis 8 Verbindungen der Formel III enthält, insbesondere Verbindungen der Formel llla und/oder IIIc, sowie Verbindungen der Formel lllb.
o) Medium, welches 1 bis 10, vorzugsweise 1 bis 8 Verbindungen der Formel IV enthält, insbesondere Verbindungen der Formel IVa und/oder IVb.
p) Medium, worin der Anteil an Verbindungen der Formel IIIa und IIIc im Gesamtgemisch vorzugsweise 5 bis 60 %, besonders bevorzugt 10 bis 35 % beträgt. Der Gehalt der einzelnen Verbindungen der Formel IIIa und IIIc beträgt vorzugsweise jeweils 2 bis 20 %.
q) Medium, worin der Anteil an Verbindungen der Formel IIIc, IVa und IVb im Gesamtgemisch vorzugsweise 5 bis 50 %, besonders bevorzugt 10 bis 35 % beträgt. Der Gehalt der einzelnen Verbindungen der Formel IIIb beträgt vorzugsweise jeweils 2 bis 15 %. Der Gehalt der einzelnen Verbindungen der Formel IVa beträgt vorzugsweise jeweils 2 bis 10 %. Der Gehalt der einzelnen Verbindungen der Formel IVb beträgt vorzugsweise jeweils 2 bis 20 %.
r) Medium, worin der Anteil an Verbindungen der Formel Va und Vb im Gesamtgemisch vorzugsweise bis zu 30 %, besonders bevorzugt bis zu 20 % beträgt. Der Gehalt der einzelnen Verbindungen der Formel Va und Vb beträgt vorzugsweise jeweils 2 bis 12 %.
s) Medium, worin der Anteil an Verbindungen mit einer Tetrahydronaphthyl- oder Naphthyleinheit (z.B. der Formel VIa-VIe) im Gesamtgemisch vorzugsweise bis zu 30 %, besonders bevorzugt bis zu 20 % beträgt. Der Gehalt der einzelnen Verbindungen dieses Typs beträgt vorzugsweise jeweils 2 bis 20 %.
t) Medium, worin der Anteil an Verbindungen der Formel VII bis XV im Gesamtgemisch 10 bis 70 %, vorzugsweise 10 bis 60 % beträgt.
u) Medium, worin der Anteil an polymerisierbaren Verbindungen im Gesamtgemisch 0,05 bis 10 %, vorzugsweise 0,1 bis 1 % beträgt.
v) Medium, welches zusätzlich eine oder mehrere Verbindungen der folgenden Formeln enthält, insbesondere zur Anwendung in OCB-Anzeigen: 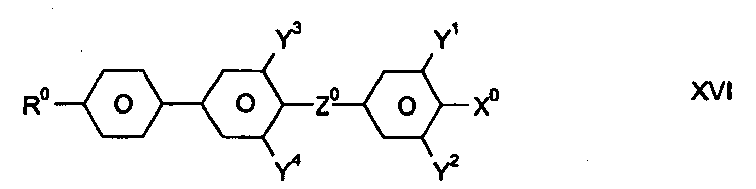 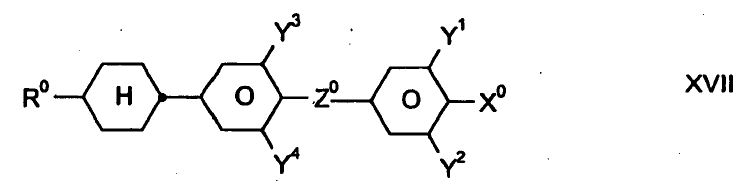 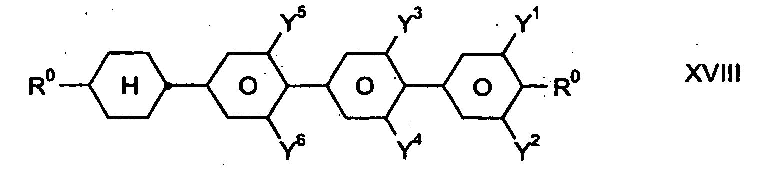
worin
- R⁰: bei jedem Auftreten gleich oder verschieden n-Alkyl, Alkoxy, Oxaalkyl, Fluoralkyl oder Alkenyl mit jeweils bis zu 9 C-Atomen,
- X⁰: F, Cl oder jeweils halogeniertes Alkyl, Alkenyl, Alkenyloxy oder Alkoxy mit jeweils bis zu 6 C-Atomen,
- Z⁰: -CF₂O- oder eine Einfachbindung,
- Y¹⁻⁶: jeweils unabhängig voneinander H oder F,
bedeuten.

X⁰ ist vorzugsweise F, Cl, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CHF₂, OCFHCF₂CF₃, OCFHCF₂CHF₂, OCF₂CF₂CF₃, OCF₂CF₂CClF₂, OCClFCF₂CF₃ oder CH=CF₂, besonders bevorzugt F oder OCF₃.

Die Verbindungen der Formel XVI sind vorzugsweise ausgewählt aus den folgenden Formeln: 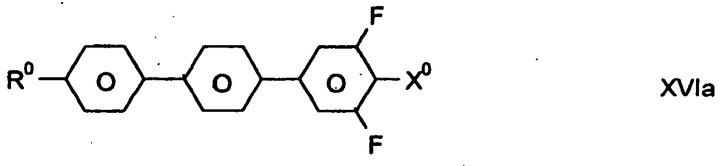 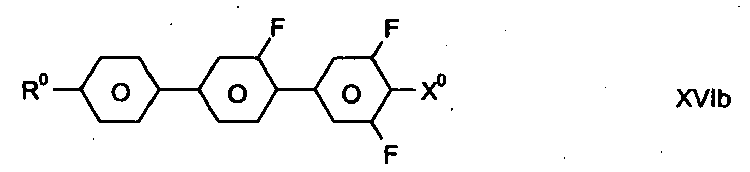 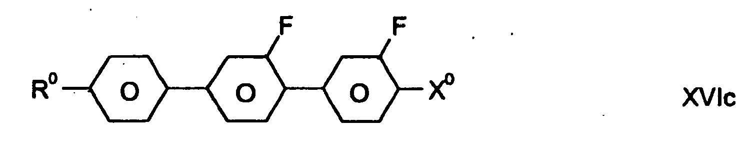 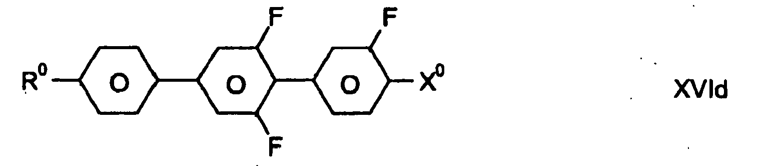 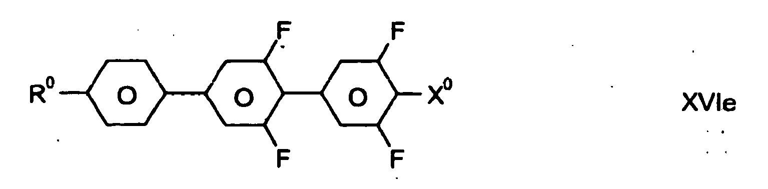 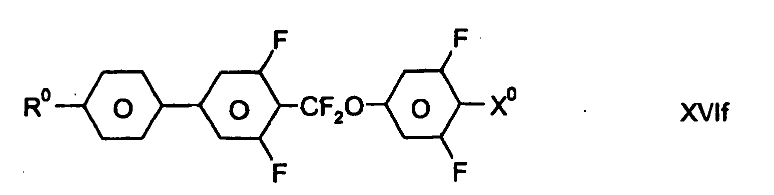 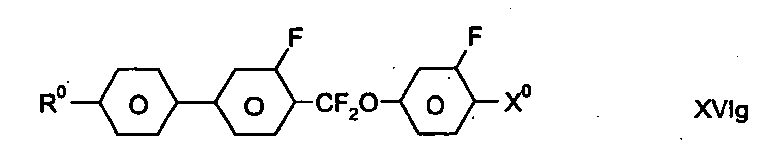 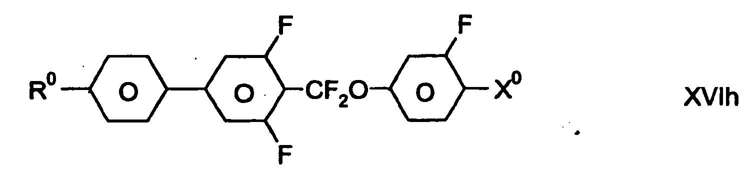 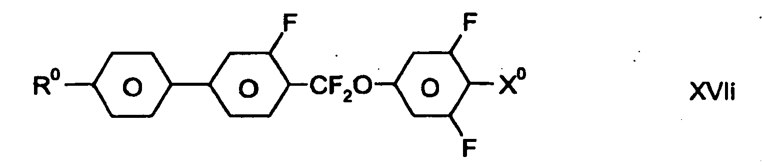 worin R⁰ und X⁰ die oben angegebene Bedeutung besitzen, und X⁰ vorzugsweise F bedeutet. Besonders bevorzugt sind Verbindungen der Formeln XVIb und XVIf.

Die Verbindungen der Formel XVII sind vorzugsweise ausgewählt aus den folgenden Formeln: 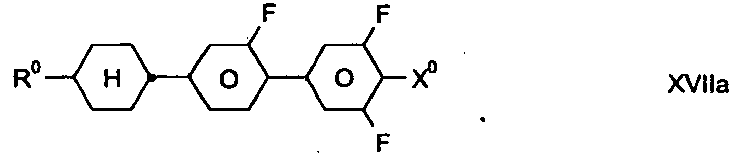 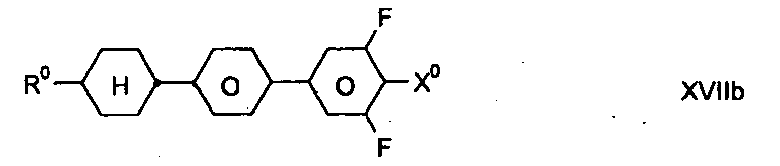 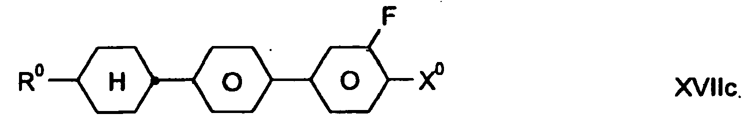 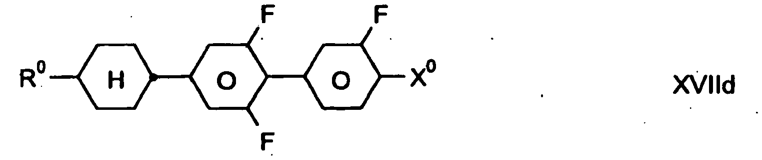 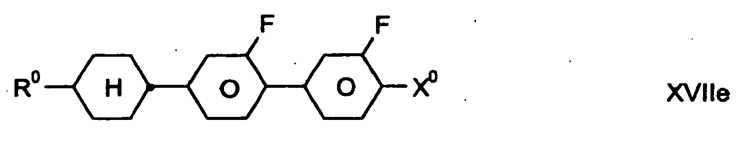 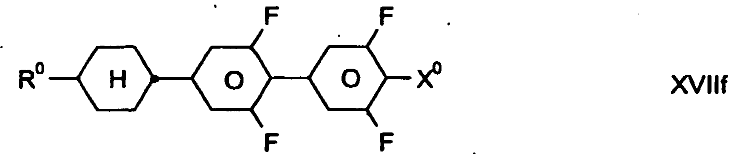 worin R⁰ und X⁰ die oben angegebene Bedeutung besitzen, und X⁰ vorzugsweise F bedeutet. Besonders bevorzugt sind Verbindungen der Formeln XVIIa, XVIIb und XVIIf.

Die Verbindungen der Formel XVIII sind vorzugsweise ausgewählt aus den folgenden Formeln: 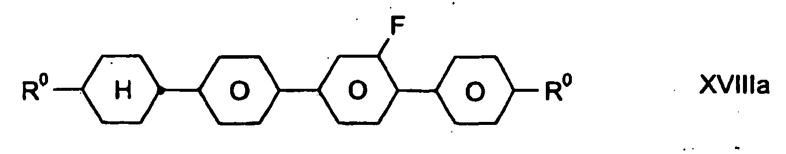 worin R° bei jedem Auftreten gleich oder verschieden die oben angegebene Bedeutung besitzt, und vorzugsweise Alkyl mit 1 bis 6 A-Atomen bedeutet.

Vorzugsweise weist die Flüssigkristallmischung einen nematischen Phasenbereich von mindestens 80 K, besonders bevorzugt von mindestens 100 K und eine Rotationsviskosität von nicht mehr als 250, vorzugsweise nicht mehr als 200 mPa·s auf.

Erfindungsgemäße FK-Medien zur Verwendung in Anzeigen des VA- oder ECB-Typs weisen eine negative dielektrische Anisotropie Δε auf, vorzugsweise von etwa -0,5 bis -7,5, insbesondere von etwa -2,8 bis -5,5 bei 20°C und 1 kHz.

Erfindungsgemäße FK-Medien zur Verwendung in Anzeigen des OCB-Typs weisen eine positive dielektrische Anisotropie Δε auf, vorzugsweise von etwa +7 bis +17 bei 20°C und 1 kHz.

Die Doppelbrechung Δn in erfindungsgemäßen FK-Medien zur Verwendung in Anzeigen des VA- oder ECB-Typs liegt vorzugsweise unter 0,16, besonders bevorzugt zwischen 0,06 und 0,14, insbesondere zwischen 0,07 und 0,12.

Die Doppelbrechung Δn in erfindungsgemäßen FK-Medien zur Verwendung in Anzeigen des OCB-Typs liegt vorzugsweise zwischen 0,14 und 0,22, insbesondere zwischen 0,16 und 0,22.

Die Dielektrika können auch weitere, dem Fachmann bekannte und in der Literatur beschriebene Zusätze enthalten. Beispielsweise können 0 bis 15 Gew.-% pleochroitische Farbstoffe zugesetzt werden, ferner Nanopartikel, Leitsalze, vorzugsweise Ethyl-dimethyldodecylammonium-4-hexoxybenzoat, Tetrabutylammoniumtetraphenylborat oder Komplexsalze von Kronenethern (vgl. z.B. Haller et al., Mol. Cryst. Liq. Cryst. 24, 249-258 (1973)) zur Verbesserung der Leitfähigkeit, oder Substanzen zur Veränderung der dielektrischen Anisotropie, der Viskosität und/oder der Orientierung der nematischen Phasen. Derartige Substanzen sind z.B. in DE-A 22 09 127, 22 40 864, 23 21 632, 23 38 281, 24 50 088, 26 37 430 und 28 53 728 beschrieben.

Die einzelnen Komponenten der Formel I bis XVIII, I* und II*der erfindungsgemäßen Flüssigkristallmischungen sind entweder bekannt, oder ihre Herstellungsweisen sind für den einschlägigen Fachmann aus dem Stand der Technik ohne weiteres abzuleiten, da sie auf in der Literatur beschriebenen Standardverfahren basieren.

Entsprechende Verbindungen der Formel II und III werden beispielsweise in EP 0 364 538 beschrieben.

Entsprechende Verbindungen der Formel IV werden beispielsweise in EP 0 122 389, DE 26 36 684 und DE 33 21 373 beschrieben.

Neben den Verbindungen der Formeln I bis XVIII können auch noch andere Bestandteile zugegen sein, z.B. in einer Menge von bis zu 45 Gew.-% der Gesamtmischung, vorzugsweise jedoch bis zu maximal 35 Gew.-%, insbesondere bis zu maximal 10 Gew.-%.

Die anderen Bestandteile werden vorzugsweise ausgewählt aus den nematischen oder nematogenen Substanzen, insbesondere den bekannten Substanzen aus den Klassen der Azoxybenzole, Benzylidenaniline, Biphenyle, Terphenyle, Phenyl oder Cyclohexylbenzoate, Cyclohexancarbonsäurephenyl oder -cyclohexylester, Phenylcyclohexane, Cyclohexylbiphenyle, Cyclohexylcyclohexane, Cyclohexylnaphthaline, 1,4-Bis-cyclohexylbiphenyle oder Cyclohexylpyrimidine, Phenyl- oder Cyclohexyldioxane, gegebenenfalls halogenierten Stilbene, Benzylphenylether, Tolane und substituierten Zimtsäuren.

Die wichtigsten als Bestandteile derartiger Flüssigkristallmischungen in Frage kommenden Verbindungen lassen sich durch folgende Formel charakterisieren

R'-L'-G'-E'-R" (1)

worin
- L' und E': jeweils ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituierten Naphthalin, Di- und Tetrahydronaphthalin, Chinazolin und Tetrahydrochinazolin gebildeten Gruppe,
- G': -CH=CH- -N(O)=N-
-CH-CQ- -CH=N(O)-
-C≡C- -CH₂-CH₂-
-CO-O- -CH₂-O-
-CO-S- -CH₂-S-
-CH=N- -COO-Phe-COO-

oder eine C-C-Einfachbindung,
- Q: Halogen, vorzugsweise Chlor, oder CN, und
- R' und R": jeweils unabhängig voneinander Alkyl, Alkoxy, Alkanoyloxy oder Alkoxycarbonyloxy mit bis zu 18, vorzugsweise bis zu 8 C-Atomen, oder einer dieser Reste auch CN, NC, NO₂, CF₃, F, Cl oder Br
bedeuten.

Bei den meisten dieser Verbindungen sind R' und R" voneinander verschieden, wobei einer dieser Reste meist eine Alkyl- oder Alkoxygruppe ist. Auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Die erfindungsgemäßen FK-Medien können z.B. hergestellt werden, indem eine oder mehrere Verbindungen der Formel I und eine oder mehrere polymerisierbare Verbindungen wie oben definiert, gegebenfalls mit weiteren Verbindungen oder Additiven, gemischt werden. Ein solches Verfahren ist ebenfalls ein Gegenstand der Erfindung.

Es versteht sich für den Fachmann von selbst, daß die erfindungsgemäße FK-Mischung auch Verbindungen enthalten kann, worin beispielsweise H, N, O, Cl, F durch die entsprechenden Isotope ersetzt sind.

Der Aufbau der erfindungsgemäßen Flüssigkristallanzeigen entspricht der üblichen Geometrie, wie sie z.B. in EP-A 0 240 379 beschrieben wird.

Ein weitere Gegenstand der Erfindung ist ein Verfahren zur Herstellung eines Mediums wie vor- und nachstehend beschrieben, dadurch gekennzeichnet, daß eine oder mehrere Verbindungen der Formel I und eine oder mehrere polymerisierbare Verbindungen wie oben definiert, gegebenfalls mit weiteren Verbindungen, insbesondere solchen der Formeln II-XVIII und (1), gemischt werden. Geeignete Methoden zur Herstellung solcher Mischungen sind dem Fachmann bekannt.

Die folgenden Beispiele sollen die Erfindung erläutern, ohne sie zu begrenzen. Vor- und nachstehend bedeuten Prozentangaben Gewichtsprozent, sofern nicht anders angegeben; alle Temperaturen sind in Grad Celsius angegeben.

Folgende Abkürzungen werden verwendet:

| | |
|---|---|
| CY-n-(O)m | 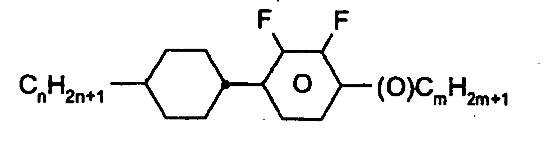 |
| CCY-n-(O)m | 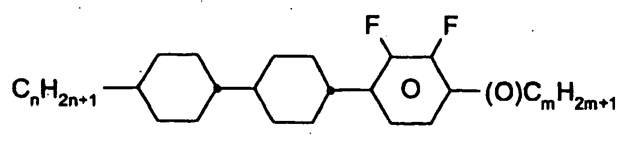 |
| CPY-n-(O)m | 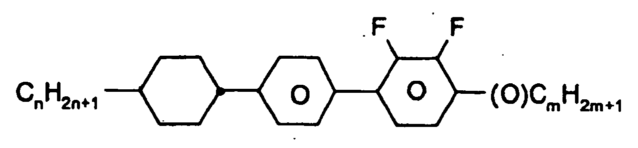 |
| PCH-n(O)m | 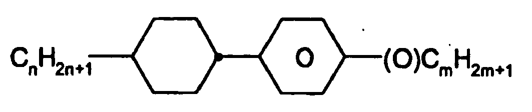 |
| CCH-n(O)m | 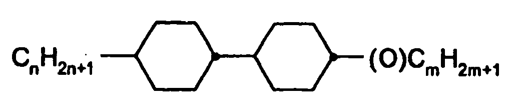 |
| CC-n-V | 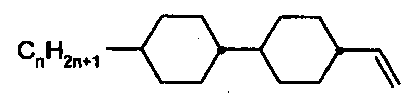 |
| CC-n-Vm | 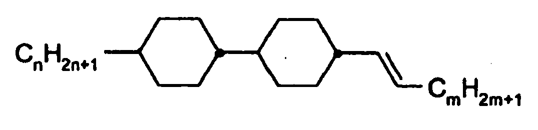 |
| CC-nV-Vm | 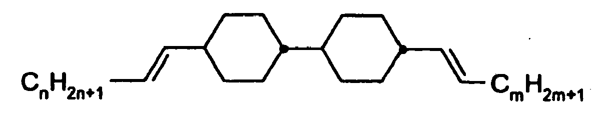 |
| CCP-Vn-m | 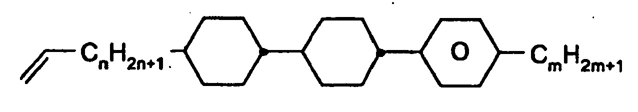 |
| CCP-nV-m | 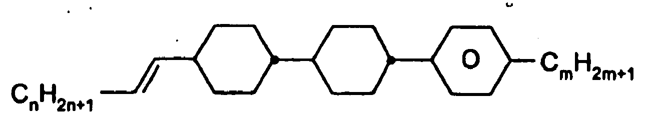 |

Alkenylverbindungen mit nicht-endständigen Doppelbindungen (d.h. zur Verwendung in erfindungsgemäßen Medien geeignet) sind z.B solche mit der Endung "-nV-Vm", "-nV-m" oder "n-Vm".

Alkenylverbindungen mit endständigen Doppelbindungen (d.h. zur Verwendung in erfindungsgemäßen Medien nicht geeignet) sind z.B solche mit der Endung "-Vn-m" oder "-n-V".

Weiterhin bedeuten:
- Kp.: Klärpunkt [°C]
- Δn: optische Anisotropie (Doppelbrechung) bei 20°C und 589 nm
- Δε: dielektrische Anisotropie bei 20°C und 1 kHz
- ε_{∥}: Dielektrizitätskonstante parallel zum Direktor bei 20°C und 1 kHz
- K₃/K₁: Verhältnis der elastischen Konstanten K₃ und K₁
- γ₁: Rotationsviskosität [mPa·s] (bei 20°C, sofern nicht anders angegeben)
- V₀: kapazitive Schwellenspannung [V]
- τ: Schaltzeit in msec

Die zur Messung der kapazitiven Schwellenspannung verwendete Anzeige weist zwei planparallele Trägerplatten im Abstand von 4 µm und Elektrodenschichten mit darüberliegenden Orientierungsschichten aus geriebenem Polyimid auf den Innenseiten der Trägerplatten auf, welche eine homöotrope Randorientierung der Flüssigkristallmoleküle bewirken.

Die polymerisierbaren Verbindungen werden in der Anzeige durch UV-Bestrahlung mit einer Stärke von 28 mW/cm² und vorgegebener Zeit polymerisiert, wobei gleichzeitig eine Spannung an die Anzeige angelegt wird (üblicherweise 10V Wechselstrom).

Der Tiltwinkel wird per Drehkristall-Experiment (Autronic-Melchers TBA-105) bestimmt. Ein kleiner Wert (d.h. eine große Abweichung vom 90°-Winkel) entspricht dabei einem großen Tilt.

### Beispiel 1

Die nematische Basis-FK-Mischung N1 wird wie folgt formuliert

| | | | |
|---|---|---|---|
| CCH-501 | 9,00 % | Kp. | + 70,0 |
| CCH-35 | 14,00 % | Δn | 0,0825 |
| PCH-53 | 8,00 % | Δε | - 3,5 |
| CY-3-O4 | 14,00 % | εₗₗ | 3,5 |
| CY-5-O4 | 13,00 % | K₃/K₁ | 1,00 |
| CCY-3-O2 | 8,00 % | γ₁ | 141 |
| CCY-5-O2 | 8,00 % | V₀ | 2,06 |
| CCY-2-1 | 9,00 % | | |
| CCY-3-1 | 9,00 % | | |
| CPY-2-O2 | 8,00 % | | |

Erfindungsgemäße Mischungen M1-7 werden hergestellt durch Zugabe von 0.3 % der polymerisierbaren Verbindung A, sowie unterschiedlicher Prozentsätze von Alkenylverbindungen der Formel I mit nicht-endständiger Doppelbindung, zur Basismischung N1. Zu Vergleichszwecken werden außerdem die Mischungen V1-6 hergestellt, durch Zugabe von 0.3 % der Verbindung A, sowie unterschiedliche Prozentsätze Alkenylverbindungen mit endständiger Doppelbindung, zur Basismischung N1. Außerdem wird die Referenzmischung R1 hergestellt durch Zugabe von 0.3 % der Verbindung A zu N1, aber ohne Zugabe von Alkenylverbindungen.

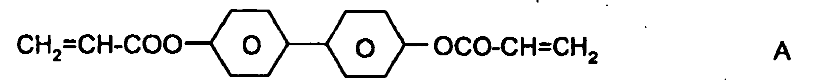

Die Mischungen werden in eine VA-Testzelle gefüllt und wie oben beschrieben durch UV-Bestrahlung 20 Minuten polymerisiert. In einer zweiten Versuchsreihe werden den Medien noch zusätzlich 0.006 % des Photoinitiators Irgacure 651® zugesetzt und die Bestrahlungszeit auf 2 Minuten verkürzt. Danach wird für alle Proben der Tiltwinkel bestimmt. Die Ergebnisse sind in Tabelle 1 zusammengefasst.

| **Mischung** | **Alkenylverbindung** | | **Tilt [°] ohne Photoinitiator** | **Tilt [°] mit Photoinitiator** |
|---|---|---|---|---|
| | **Acronym** | **Konzentration** | | |
| ***R1*** | **-** | **-** | ***86.2*** | ***86.2*** |
| **M1** | **CCP-1V-1** | **10 %** | **86.4** | **86.9** |
| **M2** | **CC-3-V1** | **5 %** | **87.0** | **87.0** |
| **M3** | **CC-3-V1** | **10 %** | **87.1** | **87.3** |
| **M4** | **CC-3-V1** | **15 %** | **87.9** | **87.9** |
| **M5** | **CC-4-V1** | **10 %** | **87.3** | **87.4** |
| **M6** | **CC-1-V3** | **10 %** | **87.0** | **87.7** |
| **M7** | **CC-2V-V2** | **10 %** | **87.7** | **88.8** |
| V1 | CC-4-V | 5 % | 88.9 | 89.7 |
| V2 | CC-5-V | 5 % | 87.8 | 88.7 |
| V3 | CC-5-V | 10 % | 88.5 | 89.4 |
| V4 | CC-5-V | 15 % | 89.2 | 89.7 |
| V5 | CCP-V-1 | 10 % | 88.1 | 89.0 |
| V6 | CCP-V2-1 | 10 % | 88.0 | 89.3 |

Tabelle 1 zeigt, dass für keine der Vergleichsmischungen V1-6, die eine Alkenylverbindung mit endständiger Doppelbindung in relevanten Prozentsätzen enthalten, kein nennenswerter Tiltwinkel gemessen werden kann (d.h. die Vorzugsorientierung der FK-Moleküllängsachsen ist nahe bei 90°). Im Gegensatz dazu kann für alle erfindungsgemäßen Mischungen M1-7, die eine Alkenylverbindung der Formel I mit nicht-endständiger Doppelbindung enthalten, ein deutlicher Tilt gemessen werden. Dieser liegt in der gleichen Größenordnung wie für die Referenzmischung R1 ohne Alkenylverbindung.

## Patentansprüche

1. Flüssigkristallines Medium, **dadurch gekennzeichnet, daß** es eine oder mehrere polymerisierbare Verbindungen und eine oder mehrere Verbindungen der Formel **I** enthält 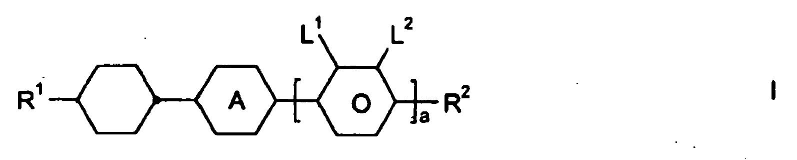 worin die einzelnen Reste folgende Bedeutung besitzen 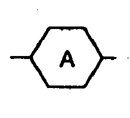 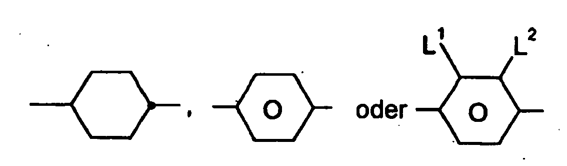
a 0 oder 1,
L¹ und L² jeweils unabhängig voneinander H, F oder CI,
R¹ bei jedem Auftreten gleich oder verschieden -(CH₂)ₘ- CH=CH-CₙH₂ₙ₊₁,
R² Alkyl mit 1 bis 12 C-Atomen, worin auch ein oder zwei nicht benachbarte CH₂-Gruppen durch -O-, -CH=CH-, - CO-, -OCO- oder -COO- so ersetzt sein können, daß O- Atome nicht direkt miteinander verknüpft sind, und endständige -CH=CH₂-Gruppen ausgeschlossen sind, oder, falls a=0 ist und der Ring A Cyclohexylen bedeutet, auch R¹,
m bei jedem Auftreten gleich oder verschieden 0,1, 2, 3, 4 oder 5 bedeutet,
n bei jedem Auftreten gleich oder verschieden 1, 2, 3, 4, 5 oder 6 bedeutet, wobei n+m ≤ 6 ist.

2. Medium nach Anspruch 1, **dadurch gekennzeichnet, daß** die polymerisierbaren Verbindungen ausgewählt sind aus Formel I* oder II*
P¹-Sp¹-X¹-A¹-(Z¹-A²)ₙ-R I*
(R-(A¹-Z¹)ₘ)ₖ-Q II*
worin
R bei jedem Auftreten gleich oder verschieden H, F, Cl, CN, SCN, SF₅H. NO₂, geradkettiges oder verzweigtes Alkyl mit 1 bis 12 C-Atomen, wobei auch ein oder zwei nicht benachbarte CH₂-Gruppen durch -O-, -S-, -CO-, - OCO-, -COO-, -O-COO-, -S-CO-, -CO-S-, -CH=CH- oder -C≡C- so ersetzt sein können, daß O- und/oder S- Atome nicht direkt miteinander verknüpft sind, oder -X²- Sp²-P², wobei in Formel II* mindestens ein Rest R P**²-** Sp²-X²- bedeutet,
P¹ und P² jeweils unabhängig voneinander eine polymerisierbare Gruppe,
Sp¹ und Sp² jeweils unabhängig voneinander eine Abstandshaltergruppe oder eine Einfachbindung,
X¹ und X² jeweils unabhängig voneinander -O-, -S-, -OCH₂-, - CH₂O-, -CO-, -COO-, -OCO-, -OCO-O-, -CO-NR⁰-, - NR⁰-CO-, -OCH₂-, -CH₂O-, -SCH₂-, -CH₂S-, -CH=CH-COO-, -OOC-CH=CH- oder eine Einfachbindung,
A¹ und A² jeweils unabhängig voneinander 1,4-Phenylen, worin auch eine oder mehrere CH-Gruppen durch N ersetzt sein können, 1,3- oder 1,4-Cyclohexylen, worin auch eine oder mehrere nicht benachbarte CH₂-Gruppen durch O und/oder S ersetzt sein können, 1,4- Cyclohexenylen, 1,4-Bicyclo-(2,2,2)-octylen, Piperidin- 1,4-diyl, Naphthalin-2,6-diyl, Decahydronaphthalin-2,6- diyl, 1,2,3,4-Tetrahydronaphthalin-2,6-diyl, Indan-2,5- diyl, Octahydro-4,7-methano-indan-2,5-diyl, wobei alle diese Gruppen unsubstituiert oder durch L ein- oder mehrfach substituiert sein können,
L F, Cl, CN oder Alkyl, Alkoxy, Alkylcarbonyl, Alkoxycarbonyl oder Alkylcarbonyloxy mit 1 bis 7 C- Atomen, worin auch ein oder mehrere H-Atome durch F oder Cl ersetzt sein können,
Z¹ -O-, -S-, -CO-, -COO-, -OCO-, -O-COO-, -OCH₂-, - CH₂O-, -SCH₂-, -CH₂S-, -CF₂O-, -OCF₂-, -CF₂S-, - SCF₂-_{.} -CH₂CH₂-, -CF₂CH₂-, -CH₂CF₂-, -CF₂CF₂-, -CH=CH-, -CF=CF-, -C≡C-, -CH=CH-COO-, -OCO- CH=CH-, CR⁰R⁰⁰ oder eine Einfachbindung,
R⁰ und R⁰⁰ jeweils unabhängig voneinander H oder Alkyl mit 1 bis 4 C- Atomen,
n 0, 1 oder 2,
Q eine ein- oder mehrbindige chirale Gruppe und
k 1, 2, 3, 4, 5 oder 6 bedeuten.

3. Medium nach Anspruch 1 oder 2, **dadurch gekennzeichnet, daß** die Verbindungen der Formel I ausgewählt sind aus den folgenden Formeln 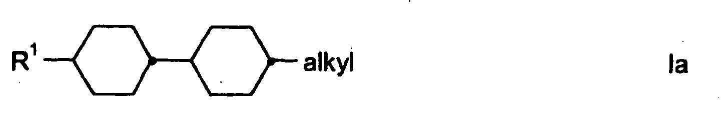 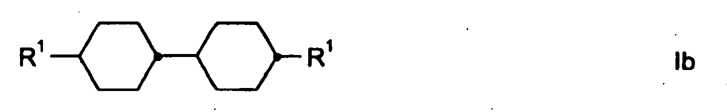 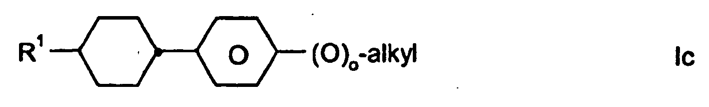 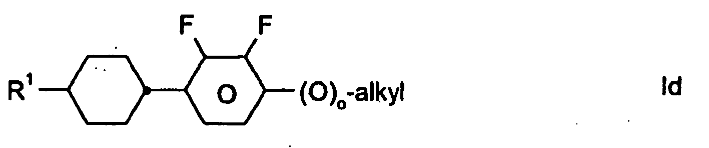 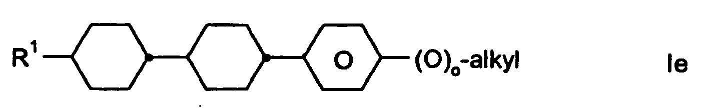 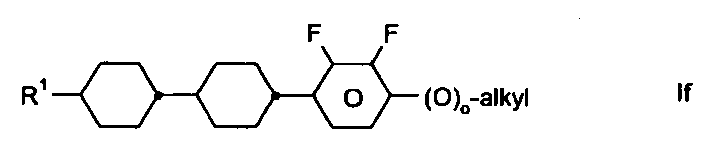 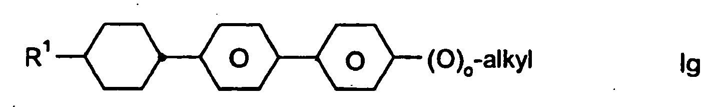 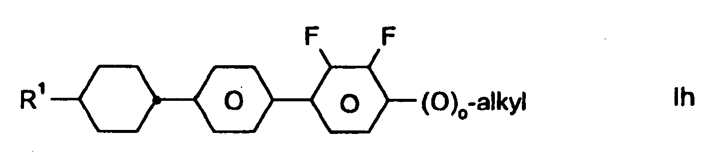 worin R¹ bei jedem Auftreten gleich oder verschieden die in Anspruch 1 angegebene Bedeutung besitzt, o 0 oder 1 ist, und "alkyl" C₁₋₆-alkyl bedeutet.

4. Medium nach einem oder mehreren der Ansprüche 1 bis 3, **dadurch gekennzeichnet, daß** die polymerisierbaren Verbindungen ausgewählt sind aus den folgenden Formeln 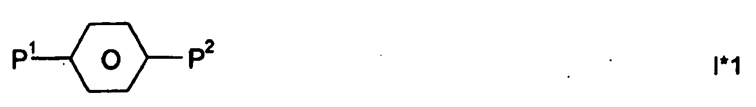 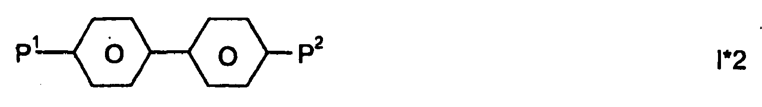 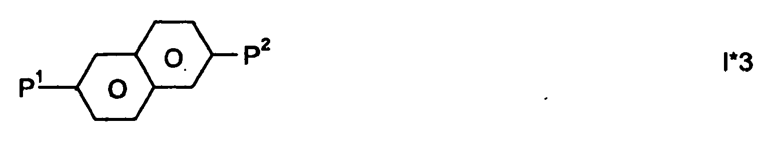 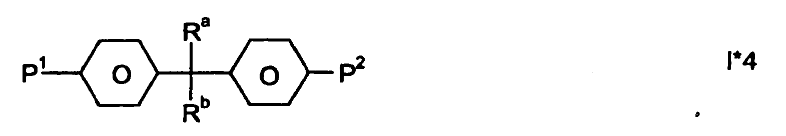 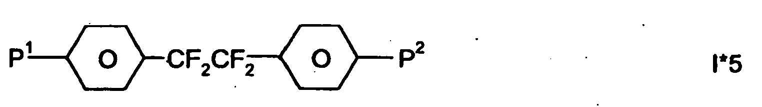 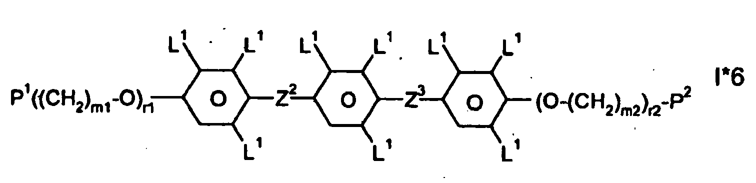 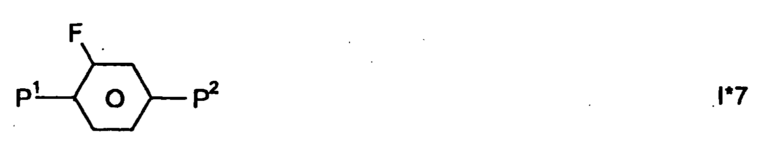 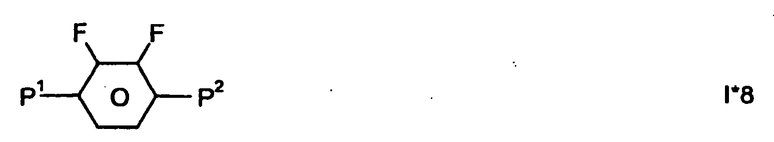 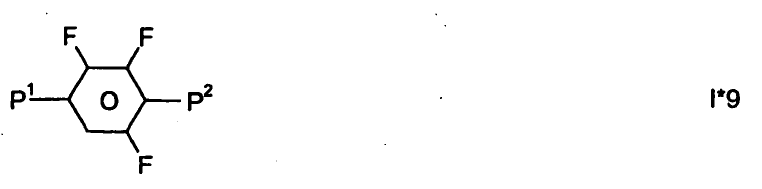 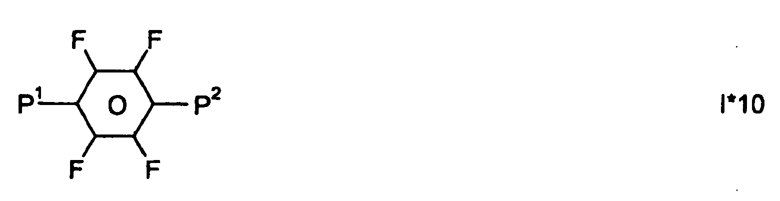 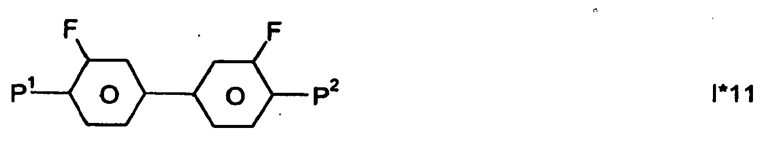 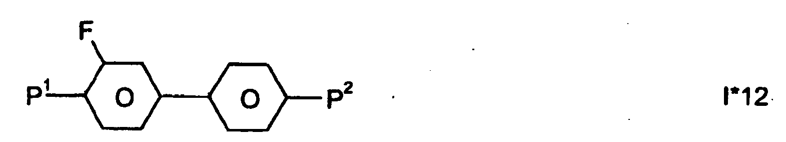 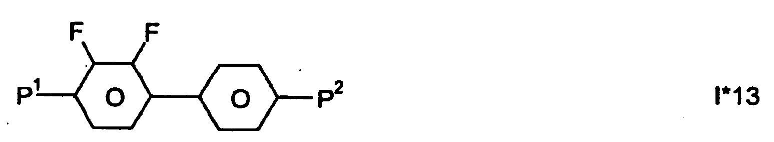 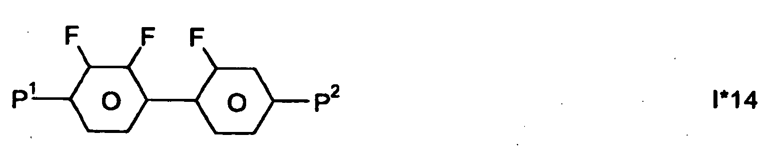 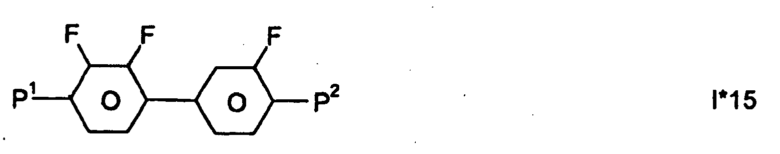 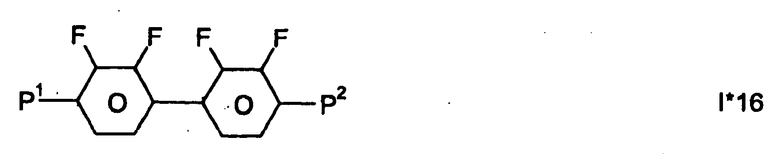 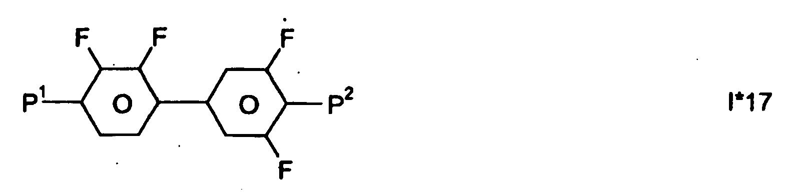 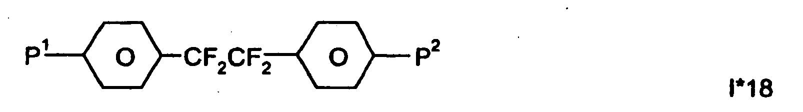 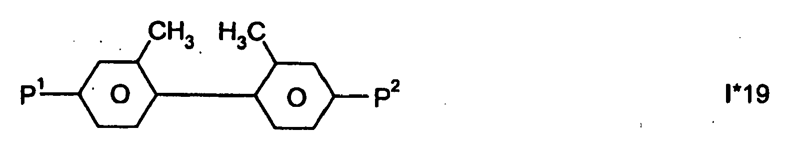 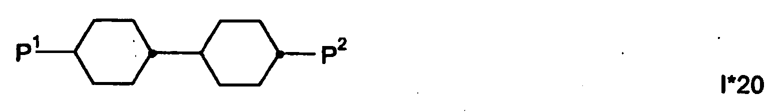 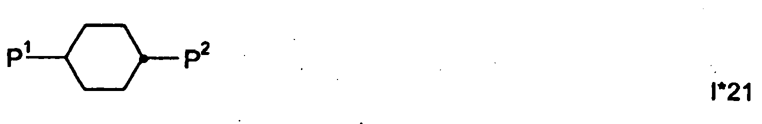 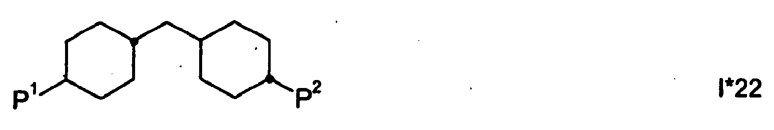 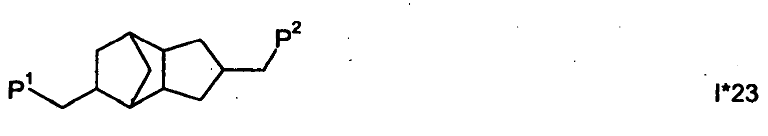 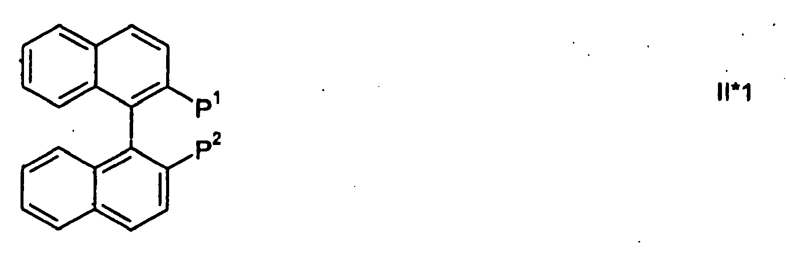 worin P¹ und P² die in Anspruch 2 angegebene Bedeutung besitzen, Z² und Z³ jeweils unabhängig voneinander eine der für Z¹ in Anspruch 2 angegebenen Bedeutungen besitzen, L¹ H oder L wie in Anspruch 2 definiert bedeutet, m1 und m2 jeweils unabhängig voneinander 1 bis 8 bedeuten, r1 und r2 jeweils unabhängig voneinander 0 oder 1, vorzugsweise 0 bedeuten, und R^{a} und R^{b} jeweils unabhängig voneinander H oder CH₃ bedeuten, und wobei die Phenylringe in Formel I*1 bis I*5 auch in 2-, 3- und/oder 5-Position durch L wie in Anspruch 2 definiert substituiert sein können.

5. Medium nach einem oder mehreren der Ansprüche 1 bis 4, **dadurch gekennzeichnet, daß** P¹ und P² Acrylat, Methacrylat, Vinyl, Vinyloxy, Propenylether oder Epoxy bedeuten.

6. Medium nach einem oder mehreren der Ansprüche 1 bis 5, **dadurch gekennzeichnet, daß** es zusätzlich eine oder mehrere Verbindungen der Formel II und /oder III enthält 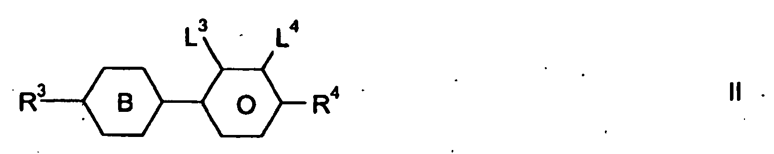 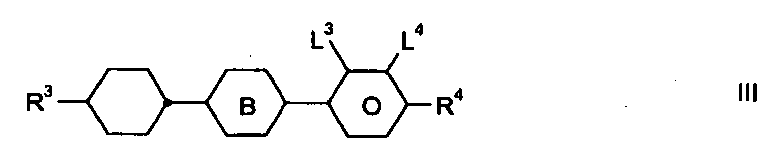
worin L³ und L⁴ jeweils unabhängig voneinander F oder Cl,
R³ und R⁴ jeweils unabhängig voneinander Alkyl mit 1 bis 12 C- Atomen, wobei auch ein oder zwei nicht benachbarte CH₂-Gruppen durch **-O-,** -CH=CH-, -CO-, -OCO- oder - COO- so ersetzt sein können, daß O-Atome nicht direkt miteinander verknüpft sind, und 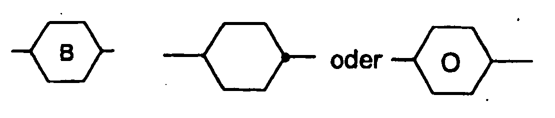 bedeuten

7. Medium nach Anspruch 6, **dadurch gekennzeichnet, daß** die Verbindungen der Formeln II und III ausgewählt sind aus den folgenden Formeln 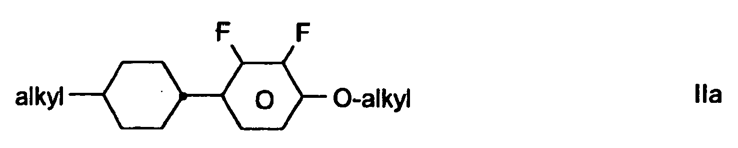 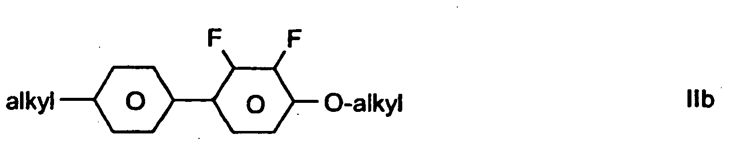 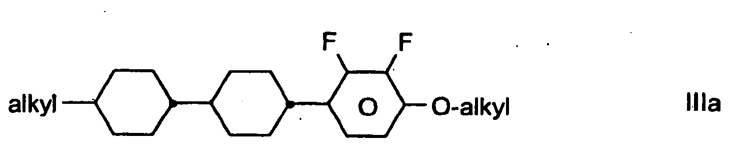 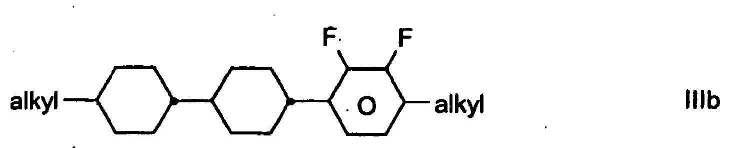 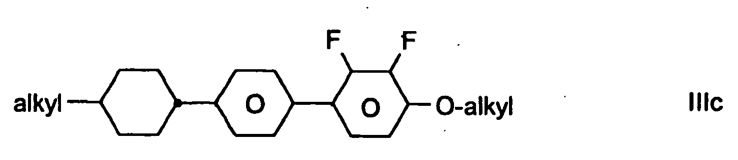 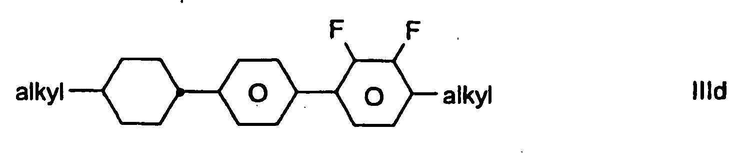 worin "alkyl" C₁₋₆-alkyl bedeutet.

8. Medium nach einem oder mehreren der Ansprüche 1 bis 7, **dadurch gekennzeichnet, daß** es zusätzlich eine oder mehrere Verbindungen der Formel VII enthält 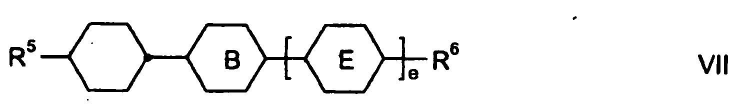 worin
R⁵ und R⁶ unabhängig voneinander eine der für R³ in Anspruch 6 angegebenen Bedeutungen haben, 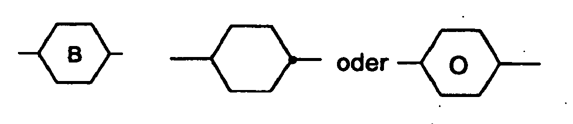 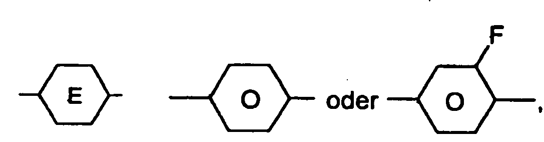 und
e 0 oder 1 bedeuten.

9. Medium nach Anspruch 8, **dadurch gekennzeichnet, daß** die Verbindungen der Formeln VII ausgewählt sind aus den folgenden Formeln 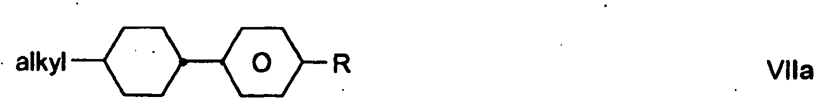 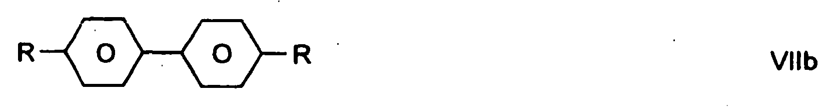 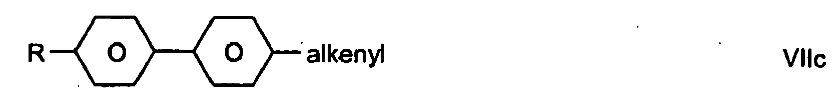 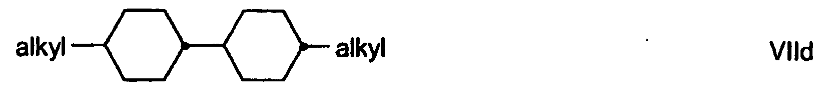 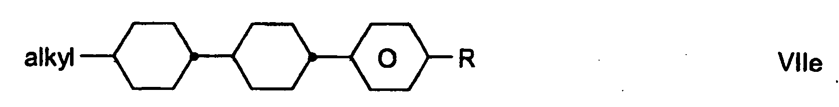 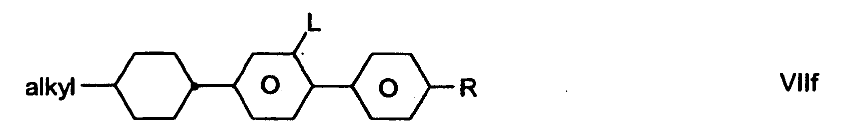 worin "alkyl" C₁₋₆-alkyl, R C₁₋₆-alkyl oder -alkoxy, "alkenyl" C₂₋₇-alkenyl und L H oder F bedeuten.

10. Medium nach einem oder mehreren der Ansprüche 1 bis 5, **dadurch gekennzeichnet, daß** es zusätzlich eine oder mehrere Verbindungen ausgewählt den folgenden Formeln enthält 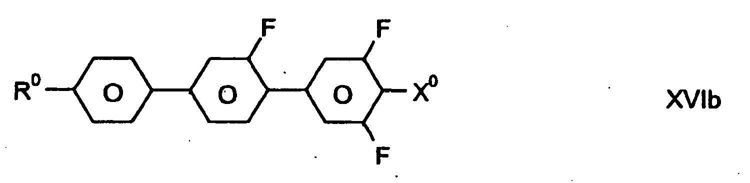 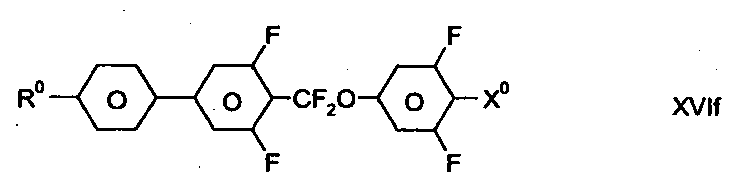 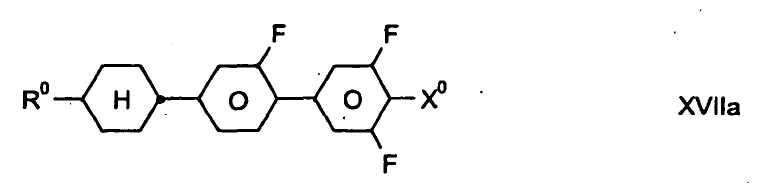 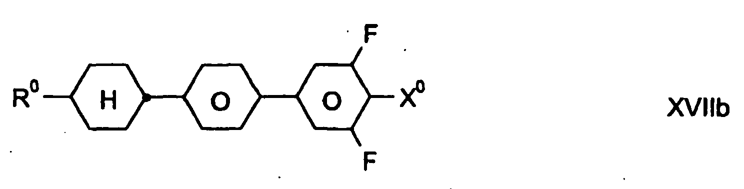 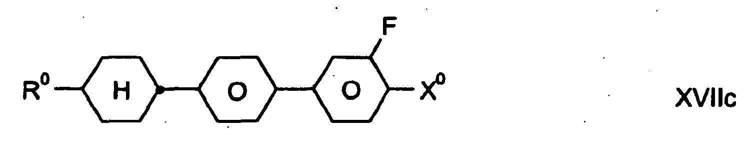 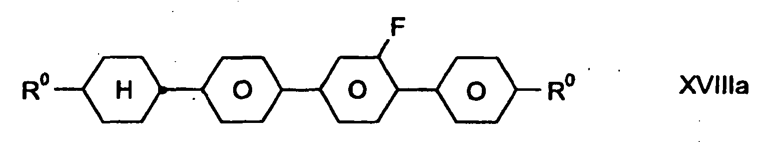 worin R⁰ Alkyl mit 1 bis 6 A-Atomen und X⁰ F oder OCF₃ bedeutet.

11. Elektrooptische Anzeige, **dadurch gekennzeichnet, daß** sie als Dielektrikum ein flüssigkristallines Medium nach einem oder mehreren der Ansprüche 1 bis 10 enthält.

12. Elektrooptische Anzeige nach Anspruch 11, **dadurch gekennzeichnet, daß** sie auf dem VA-, MVA-, PSA-VA-, OCB oder PSA-OCB-Erfekt beruht.

13. Verfahren zur Herstellung eines Mediums nach einem oder mehreren der Ansprüche 1 bis 10, **dadurch gekennzeichnet, daß** eine oder mehrere Verbindungen der Formel I und eine oder mehrere polymerisierbare Verbindungen wie in einem oder mehreren der Ansprüche 1 bis 5 definiert, gegebenfalls mit weiteren Verbindungen oder Additiven, gemischt werden.

14. Elektrooptische Anzeige nach Anspruch 11 oder 12, **dadurch gekennzeichnet, dass** die polymerisierbaren Verbindungen durch Photopolymerisation polymerisiert werden.

15. Elektrooptische Anzeige nach Anspruch 14, **dadurch gekennzeichnet, dass** der Polymerisationsvorgang bei angelegter Spannung in der Anzeige durchgeführt wird.

## Claims

1. Liquid-crystalline medium, **characterised in that** it comprises one or more polymerisable compounds and one or more compounds of the formula I 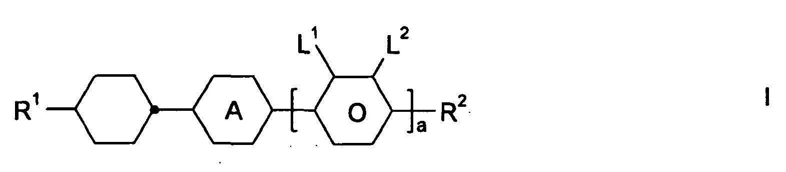 in which the individual radicals have the following meaning: 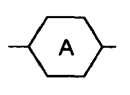 denotes 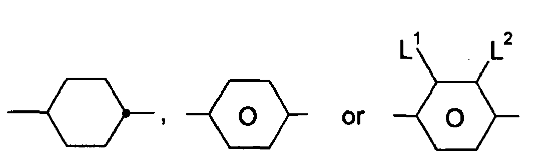
a denotes 0 or 1,
L¹ and L² each, independently of one another, denote H, F or Cl,
R¹ on each occurrence, identically or differently, denotes -(CH₂)ₘ-CH=CH-CₙH₂ₙ₊₁.
R² denotes alkyl having 1 to 12 C atoms, in which, in addi- tion, one or two non-adjacent CH₂ groups may be replaced by -O-, -CH=CH-, -CO-, -OCO- or -COO- in such a way that O atoms are not linked directly to one another, and terminal -CH=CH₂- groups are excluded, or, if a=0 and the ring A denotes cyclohexylene, R² also denotes R¹,
m on each occurrence, identically or differently, denotes 0, 1, 2, 3, 4 or 5,
n on each occurrence, identically or differently, denotes 1, 2, 3, 4, 5 or 6, where n+m is ≤ 6.

2. Medium according to Claim 1, **characterised in that** the polymerisable compounds are selected from formula I* or II*:
P¹-Sp¹-X¹-A¹-(Z¹-A²)ₙ-R I*
(R-(A¹-Z¹)ₘ)ₖ-Q II*
in which
R on each occurrence, identically or differently, denotes H, F, Cl, CN, SCN, SF₅H, NO₂, straight-chain or branched alkyl having 1 to 12 C atoms, in which, in addition, one or two non-adjacent CH₂ groups may be replaced by -O-, -S-, -CO-, -OCO-, -COO-, -O-COO-, -S-CO-, -CO-S-, -CH=CH- or -C≡C- in such a way that O and/or S atoms are not linked directly to one another, or -X²-Sp²-P², where in formula II* at least one radical R denotes P²-Sp²-X²-,
P¹ and P² each, independently of one another, denote a polymer- isable group,
Sp¹ and Sp² each, independently of one another, denote a spacer group or a single bond,
X¹ and X² each, independently of one another, denote -O-, -S-, -OCH₂-, -CH₂O-, -CO-, -COO-, -OCO-, -OCO-O-, -CO-NR⁰-, -NR⁰-CO-, -OCH₂-, -CH₂O-, -SCH₂-, -CH₂S-, -CH=CH-COO-, -OOC-CH=CH- or a single bond,
A¹ and A² each, independently of one another, denote 1,4- phenylene, in which, in addition, one or more CH groups may be replaced by N, 1,3- or 1,4-cyclohexy- lene, in which, in addition, one or more non-adjacent CH₂ groups may be replaced by O and/or S, 1,4-cyclo- hexenylene, 1,4-bicyclo[2.2.2]octylene, piperidine-1,4- diyl, naphthalene-2,6-diyl, decahydronaphthalene-2,6- diyl, 1,2,3,4-tetrahydronaphthalene-2,6-diyl, indane-2,5- diyl, octahydro-4,7-methanoindane-2,5-diyl, where all these groups may be unsubstituted or mono- or poly- substituted by L,
L denotes F, Cl, CN or alkyl, alkoxy, alkylcarbonyl, alkoxycarbonyl or alkylcarbonyloxy having 1 to 7 C atoms, in which, in addition, one or more H atoms may be replaced by F or Cl,
Z¹ denotes -O-, -S-, -CO-, -COO-, -OCO-, -O-COO-, -OCH₂-, -CH₂O-, -SCH₂-, -CH₂S-, -CF₂O-, -OCF₂-, -CF₂S-, -SCF₂-, -CH₂CH₂-, -CF₂CH₂-, -CH₂CF₂-, -CF₂CF₂-, -CH=CH-, -CF=CF-, -C≡C-, -CH=CH-COO-, -OCO-CH=CH-, CR⁰R⁰⁰ or a single bond,
R⁰ and R⁰⁰ each, independently of one another, denote H or alkyl having 1 to 4 C atoms,
n denotes 0, 1 or 2,
Q denotes a mono- or polyvalent chiral group, and
k denotes 1, 2, 3, 4, 5 or 6.

3. Medium according to Claim 1 or 2, **characterised in that** the compounds of the formula I are selected from the following formulae: 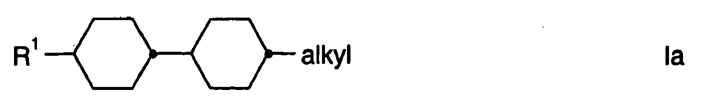 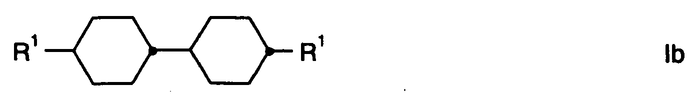 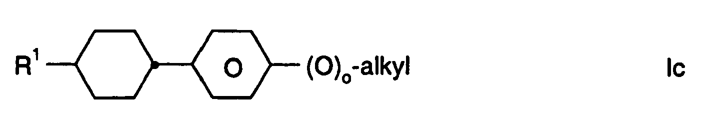 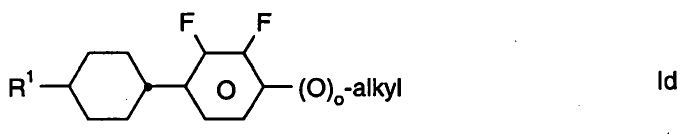 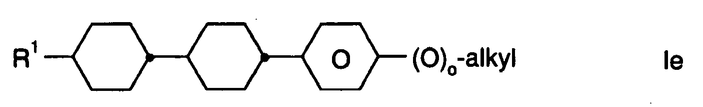 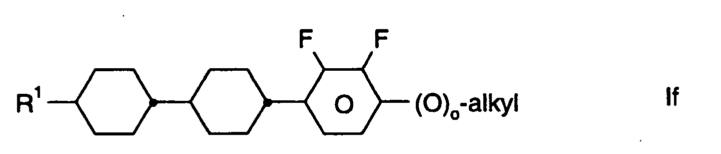 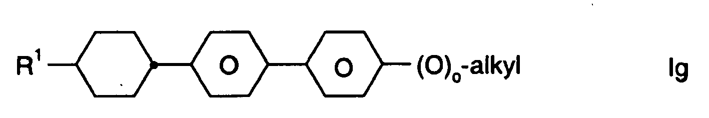 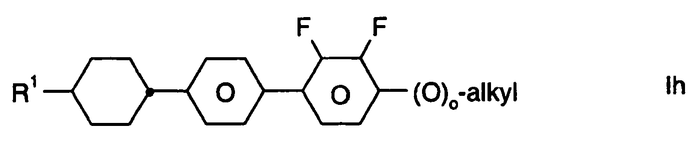 in which R¹ on each occurrence, identically or differently, has the meaning indicated in Claim 1, o is 0 or 1, and "alkyl" denotes C₁₋₆-alkyl.

4. Medium according to one or more of Claims 1 to 3, **characterised in that** the polymerisable compounds are selected from the following formulae: 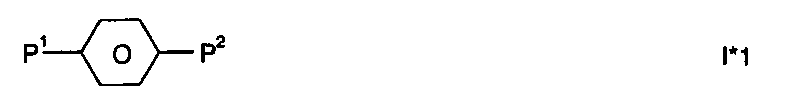 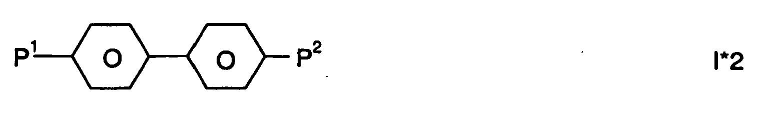 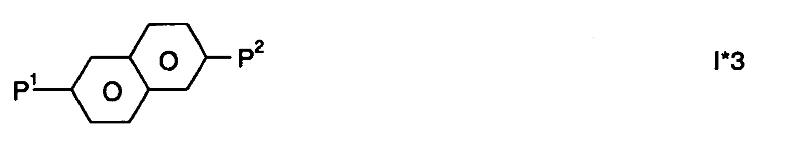 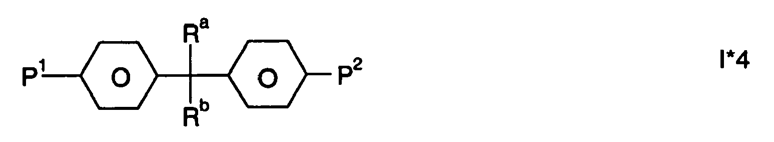 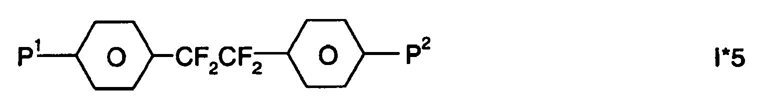 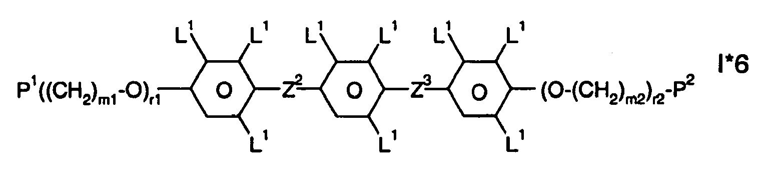 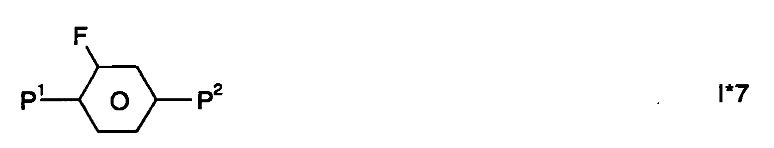 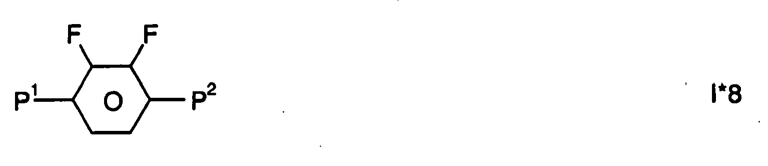 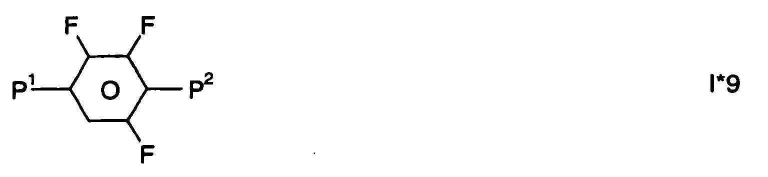 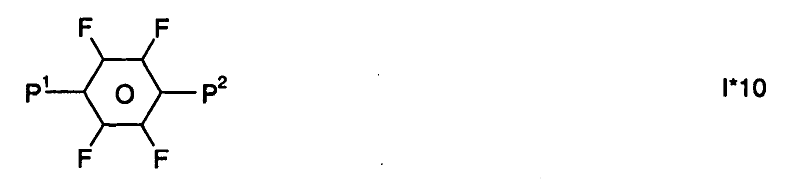 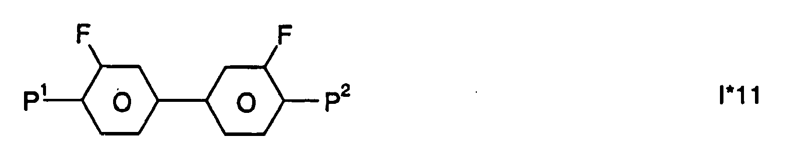 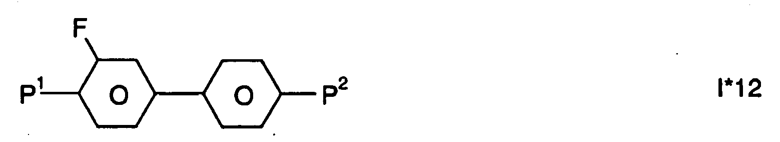 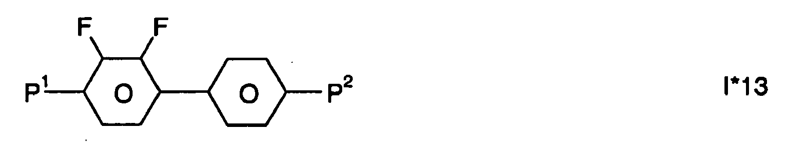 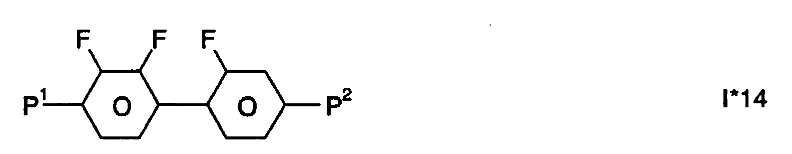 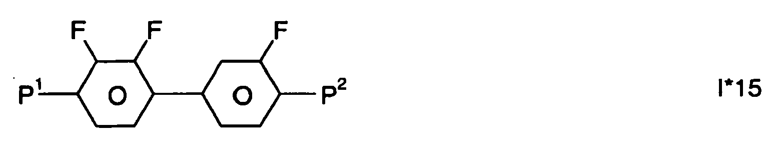 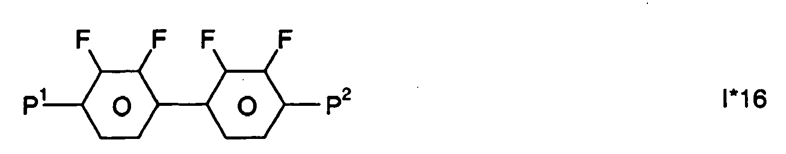 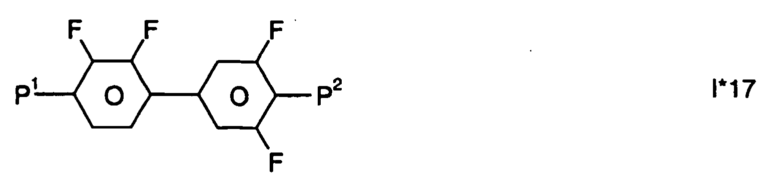 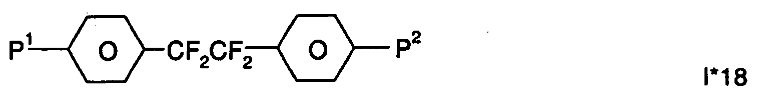 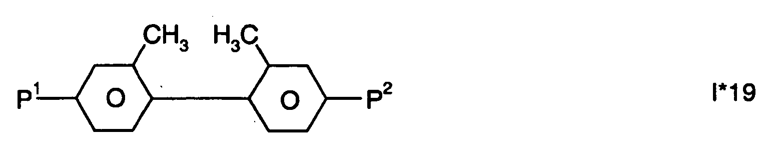 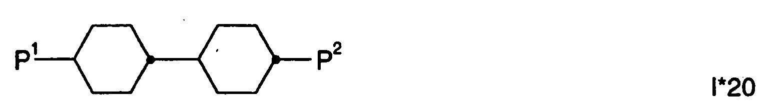 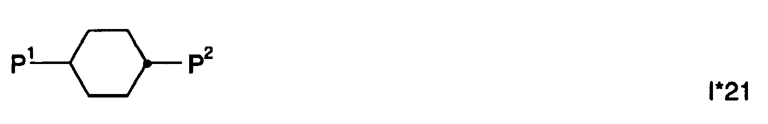 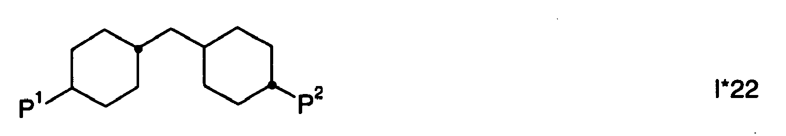 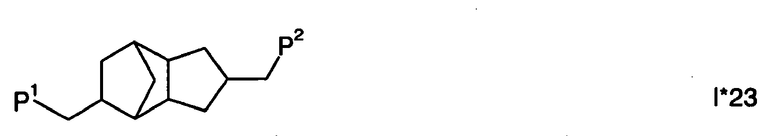 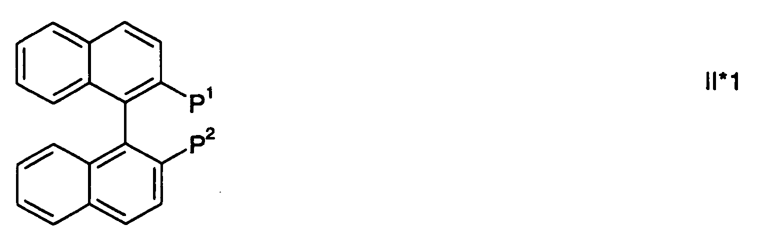 in which P¹ and P² have the meaning indicated in Claim 2, Z² and Z³ each, independently of one another, have one of the meanings indicated for Z¹ in Claim 2, L¹ denotes H or L as defined in Claim 2, m1 and m2 each, independently of one another, denote 1 to 8, r1 and r2 each, independently of one another, denote 0 or 1, preferably 0, and R^{a} and R^{b} each, independently of one another, denote H or CH₃, where the phenyl rings in formulae I*1 to I*5 may also be substituted in the 2-, 3- and/or 5-position by L as defined in Claim 2.

5. Medium according to one or more of Claims 1 to 4, **characterised in that** P¹ and P² denote acrylate, methacrylate, vinyl, vinyloxy, propenyl ether or epoxide.

6. Medium according to one or more of Claims 1 to 5, **characterised in that** it additionally comprises one or more compounds of the formulae II and/or III: 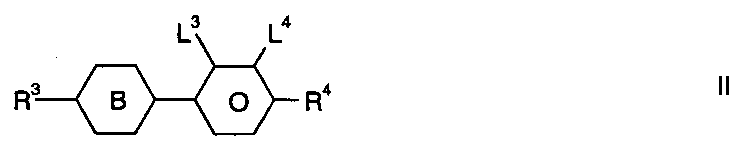 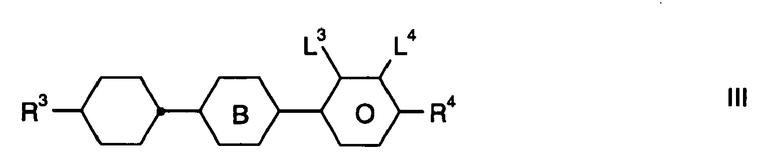
in which L³ and L⁴ each, independently of one another, denote F or Cl,
R³ and R⁴ each, independently of one another, denote alkyl having 1 to 12 C atoms, in which, in addition, one or two non-adja- cent CH₂ groups may be replaced by -O-, -CH=CH-, -CO-, -OCO- or -COO- in such a way that O atoms are not linked directly to one another, and

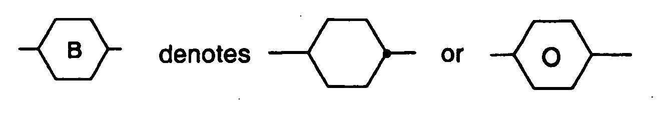

7. Medium according to Claim 6, **characterised in that** the compounds of the formulae II and III are selected from the following formulae: 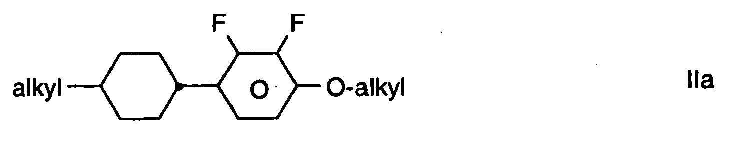 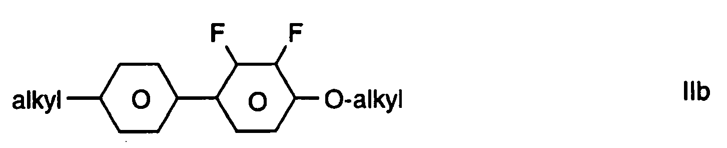 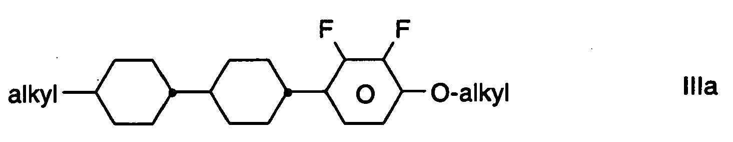 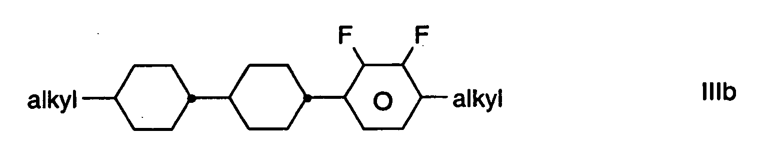 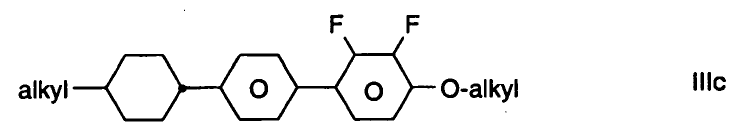 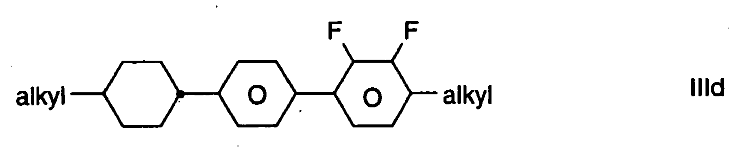 in which "alkyl" denotes C₁₋₆-alkyl.

8. Medium according to one or more of Claims 1 to 7, **characterised in that** it additionally comprises one or more compounds of the formula VII 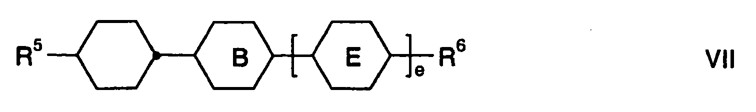 in which
R⁵ and R⁶, independently of one another, have one of the mean- ings indicated for R³ in Claim 6, 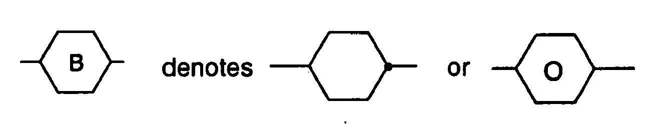 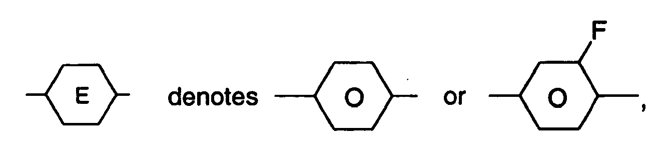 and
e denotes 0 or 1.

9. Medium according to Claim 8, **characterised in that** the compounds of the formula VII are selected from the following formulae: 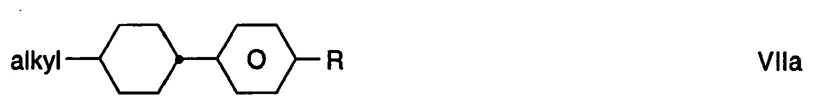 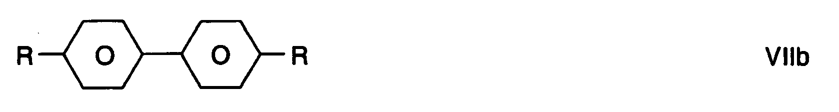 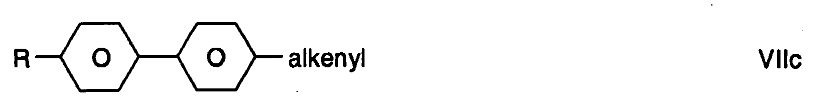 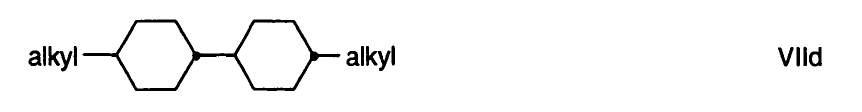 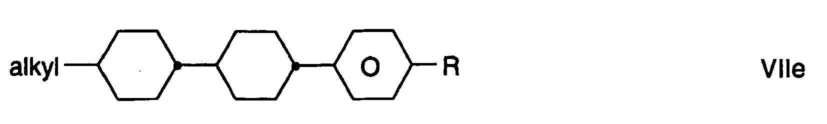 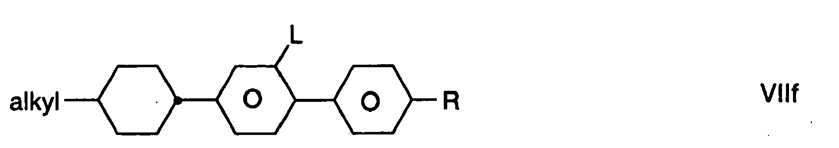 in which "alkyl" denotes C₁₋₆-alkyl, R denotes C₁₋₆-alkyl or -alkoxy, "alkenyl" denotes C₂-₇-alkenyl, and L denotes H or F.

10. Medium according to one or more of Claims 1 to 5, **characterised in that** it additionally comprises one or more compounds selected from the following formulae: 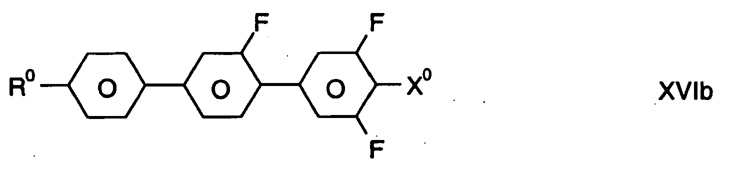 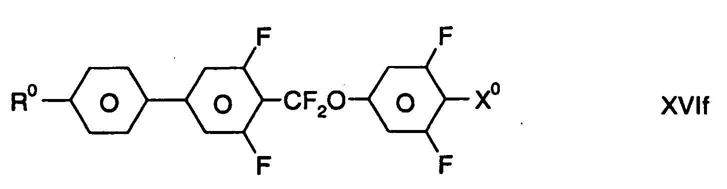 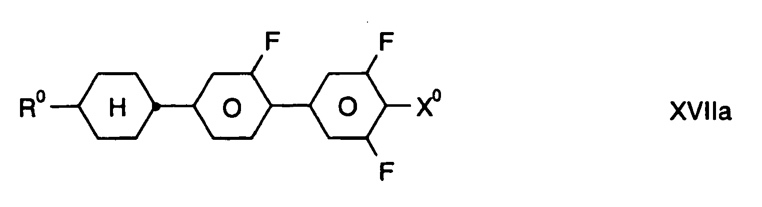 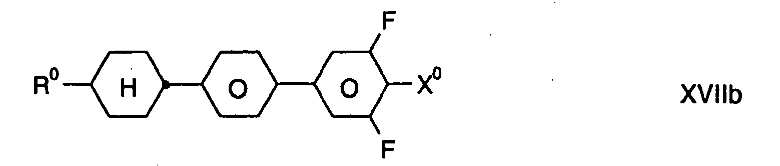 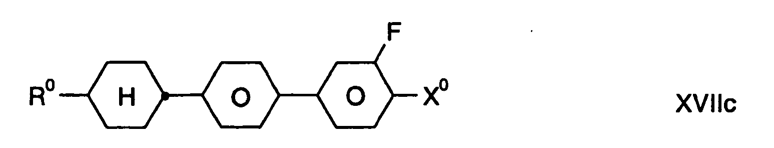 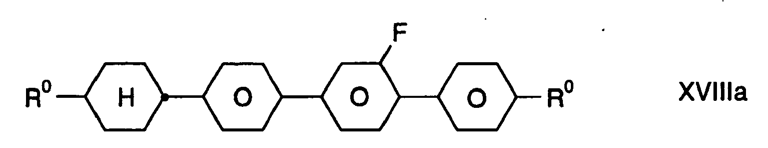 in which R⁰ denotes alkyl having 1 to 6 C atoms, and X⁰ denotes F or OCF₃.

11. Electro-optical display, **characterised in that** it contains, as dielectric, a liquid-crystalline medium according to one or more of Claims 1 to 10.

12. Electro-optical display according to Claim 11, **characterised in that** it is based on the VA, MVA, PSA-VA, OCB or PSA-OCB effect.

13. Process for the preparation of a medium according to one or more of Claims 1 to 10, **characterised in that** one or more compounds of the formula I and one or more polymerisable compounds as defined in one or more of Claims 1 to 5 are mixed, optionally with further compounds or additives.

14. Electro-optical display according to Claim 11 or 12, **characterised in that** the polymerisable compounds are polymerised by photopolymerisation.

15. Electro-optical display according to Claim 14, **characterised in that** the polymerisation process is carried out with an applied voltage in the display.

## Revendications

1. Milieu cristallin liquide, **caractérisé en ce qu'**il comprend un ou plusieurs composés polymérisables et un ou plusieurs composés de la formule I 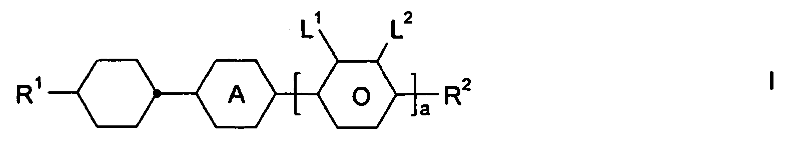 dans laquelle les radicaux individuels ont la signification suivante : 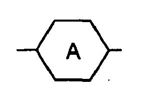 représente 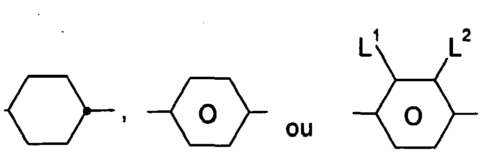
a représente 0 ou 1,
L¹ et L² chacun indépendamment l'un de l'autre, représentent H, F ou Cl,
R¹ à chaque occurrence, de façon identique ou différente, représente -(CH₂)ₘ-CH=CH-CₙH₂ₙ₊₁,
R² représente alkyle ayant 1 à 12 atomes de C, dans le- quel, en addition, un ou deux groupes CH₂ non adja- cents peuvent être remplacés par -O-, -CH=CH-, -CO-, -OCO- ou -COO- de telle sorte que des atomes de O ne soient pas liés directement l'un à l'autre, et des groupes -CH=CH₂- terminaux soient exclus, ou, si a=0 et si le cycle A représente cyclohexylène, R² repré- sente aussi R¹,
m à chaque occurrence, de façon identique ou différente, représente 0, 1, 2, 3, 4 ou 5,
n à chaque occurrence, de façon identique ou différente, représente 1, 2, 3, 4, 5 ou 6, où n+m est ≤ 6.

2. Milieu selon la revendication 1, **caractérisé en ce que** les composés polymérisables sont choisis parmi la formule I* ou II*:
P¹-Sp¹-X¹-A¹-(Z¹-A²)ₙ-R I*
(R-(A¹-Z¹)ₘ)ₖ-Q II*
dans laquelle
R à chaque occurrence, de façon identique ou différente, représente H, F, Cl, CN, SCN, SF₅H, NO₂, alkyle en chaîne droite ou ramifié ayant 1 à 12 atomes de C, dans lequel, en addition, un ou deux groupes CH₂ non adjacents peuvent être remplacés par -O-, -S-, -CO-, -OCO-, -COO-, -O-COO-, -S-CO-, -CO-S-, -CH=CH- ou -C≡C- de telle sorte que des atomes de O et/ou S ne soient pas liés directement l'un à l'autre, ou -X²-Sp²-P², où dans la formule II* au moins un radical R représente P²-Sp²-X²-,
P¹ et P² chacun, indépendamment l'un de l'autre, représentent un groupe polymérisable,
Sp¹ et Sp² chacun, indépendamment l'un de l'autre, représentent un groupe espaceur ou une liaison simple,
X¹ et X² chacun, indépendamment l'un de l'autre, représentent -O-, -S-, -OCH₂-, -CH₂O-, -CO-, -COO-, -OCO-, -OCO-O-, -CO-NR⁰-, -NR⁰-CO-, -OCH₂-, -CH₂O-, -SCH₂-, -CH₂S-, -CH=CH-COO-, -OOC-CH=CH- ou une liaison simple,
A¹ et A² chacun, indépendamment l'un de l'autre, représentent 1,4-phénylène, dans lequel, en addition, un ou plu- sieurs groupes CH peuvent être remplacés par N, 1,3- ou 1,4-cyclohexylène, dans lequel, en addition, un ou plusieurs groupes CH₂ non adjacents peuvent être rem- placés par O et/ou S, 1,4-cyclohexénylène, 1,4-bicyclo- [2.2.2]octylène, pipéridine-1,4-diyle, naphtalène-2,6- diyle, décahydronaphtalène-2,6-diyle, 1,2,3,4-tétra- hydronaphtalène-2,6-diyle, indane-2,5-diyle, octahydro- 4,7-méthanoïndane-2,5-diyle, où tous ces groupes peuvent être non substitués ou mono- ou polysubsti- tués par L,
L représente F, CI, CN ou alkyle, alcoxy, alkylcarbonyle, alcoxycarbonyle ou alkylcarbonyloxy ayant 1 à 7 atomes de C, dans lequel, en addition, un ou plusieurs atomes de H peuvent être remplacés par F ou CI,
Z¹ représente -O-, -S-, -CO-, -COO-, -OCO-, -O-COO-, -OCH₂-, -CH₂O-, -SCH₂-, -CH₂S-, -CF₂O-, -OCF₂-, -CF₂S-, -SCF₂-, -CH₂CH₂-, -CF₂CH₂-, -CH₂CF₂-, -CF₂CF₂-, -CH=CH-, -CF=CF-, -C≡C-, -CH=CH-COO-, -OCO-CH=CH-, CR⁰R⁰⁰ ou une liaison simple,
R⁰ et R⁰⁰ chacun, indépendamment l'un de l'autre, représentent H ou alkyle ayant 1 à 4 atomes de C,
n représente 0, 1 ou 2,
Q représente un groupe chiral mono- ou polyvalent, et
k représente 1, 2, 3, 4, 5 ou 6.

3. Milieu selon la revendication 1 ou 2, **caractérisé en ce que** les composés de la formule I sont choisis parmi les formules suivantes : 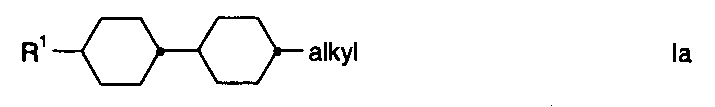 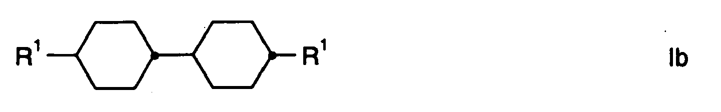 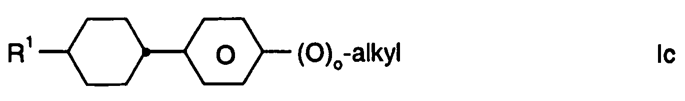 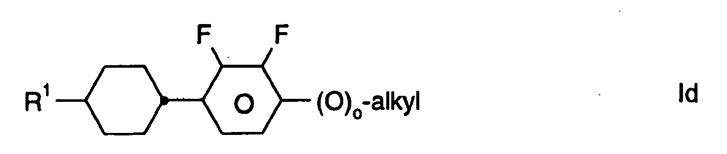 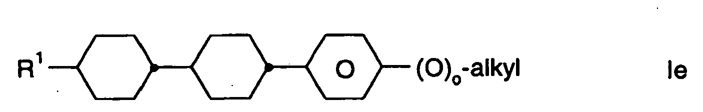 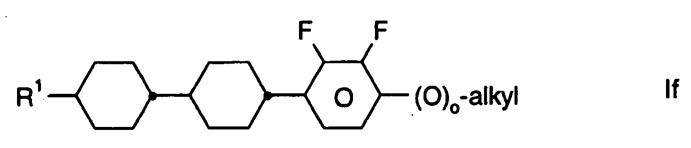 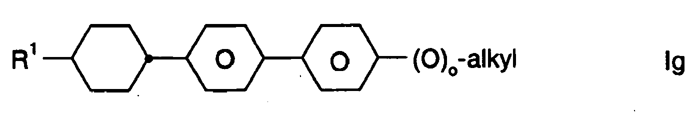 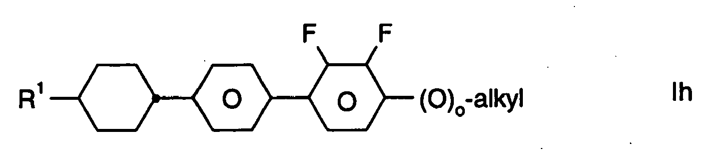 dans lesquelles R¹ à chaque occurrence, de façon identique ou différente, a la signification indiquée dans la revendication 1, o est 0 ou 1, et "alkyl" représente C₁₋₆-alkyle.

4. Milieu selon une ou plusieurs des revendications 1 à 3, **caractérisé en ce que** les composés polymérisables sont choisis parmi les formules suivantes : 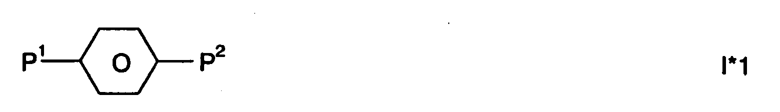 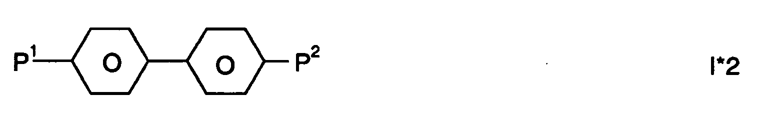 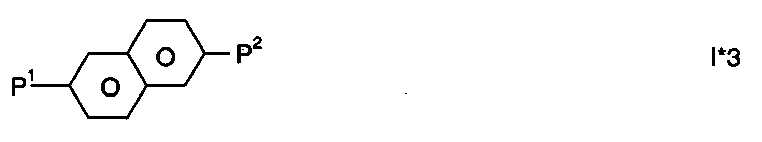 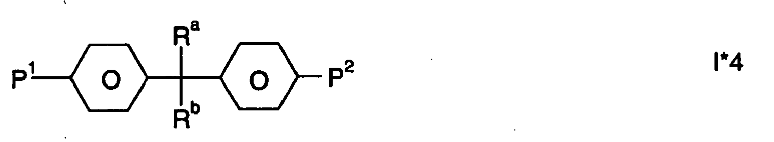 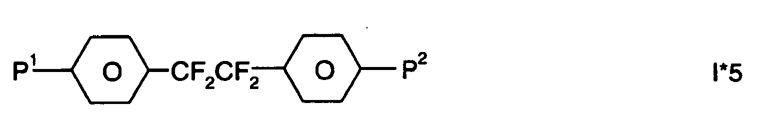 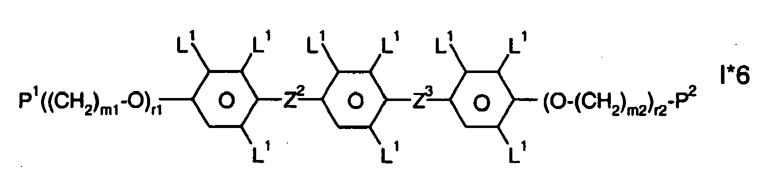 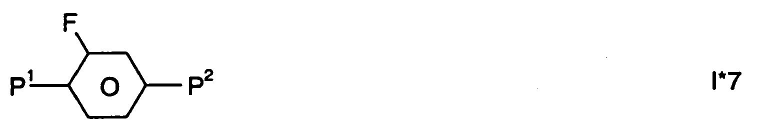 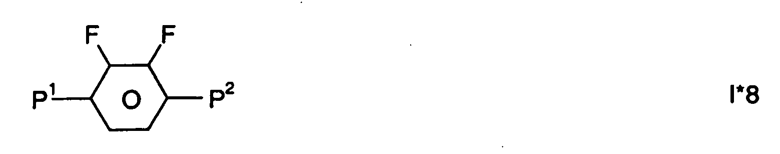 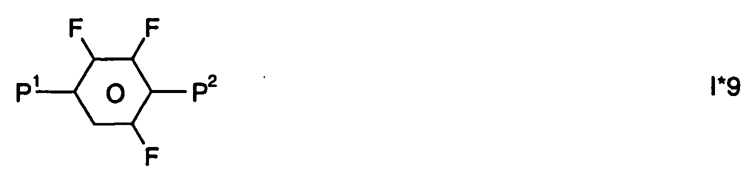 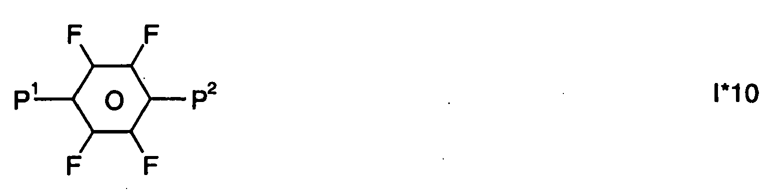 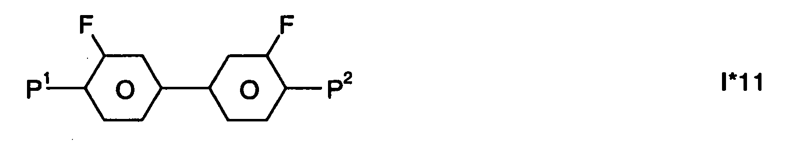 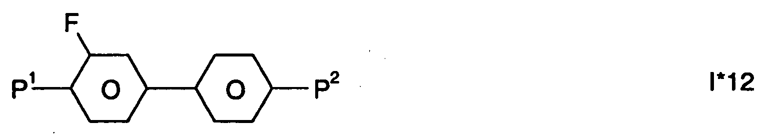 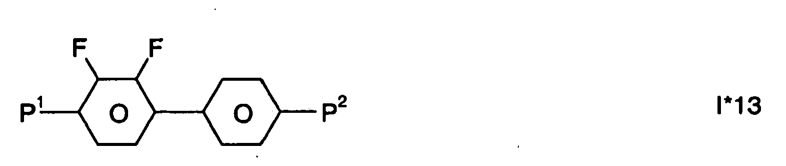 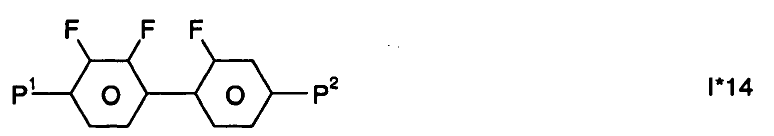 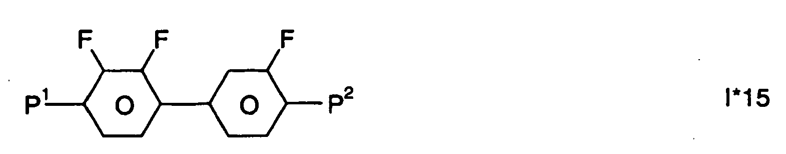 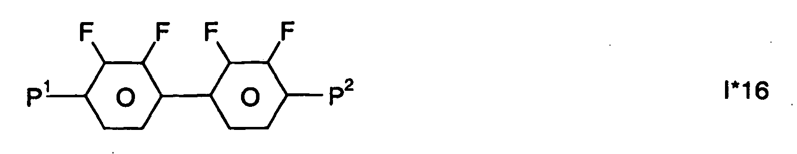 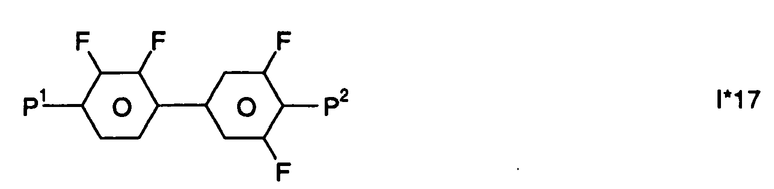 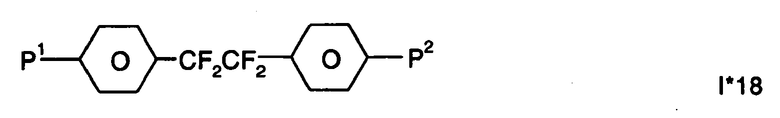 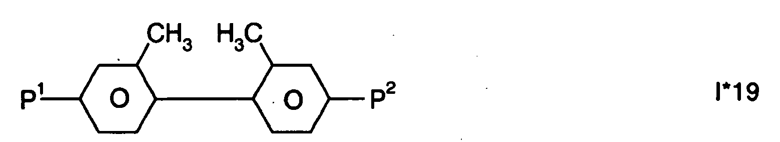 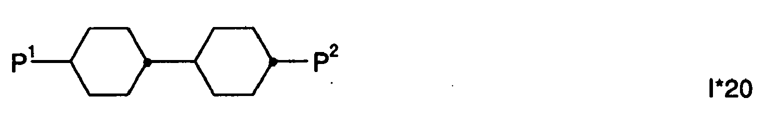 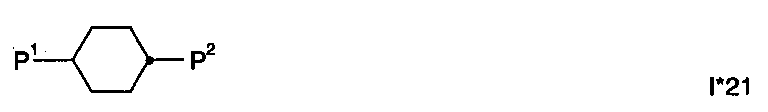 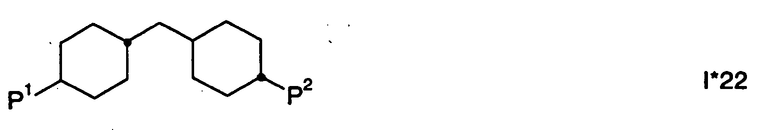 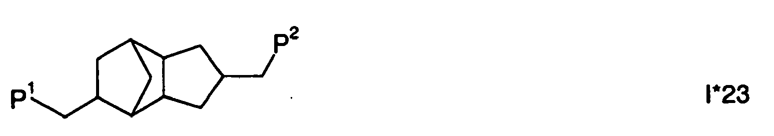 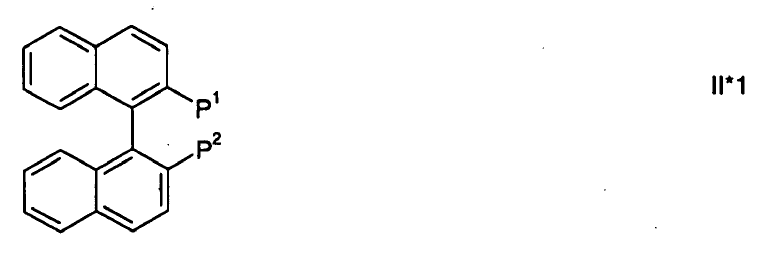 dans lesquelles P¹ et P² ont la signification indiquée dans la revendication 2, Z² et Z³ chacun, indépendamment l'un de l'autre, ont une des significations indiquées pour Z¹ dans la revendication 2, L¹ représente H ou L comme défini dans la revendication 2, m1 et m2 chacun, indépendamment l'un de l'autre, représentent 1 à 8, r1 et r2 chacun, indépendamment l'un de l'autre, représentent 0 ou 1, de préférence 0, et R^{a} et R^{b} chacun, indépendamment l'un de l'autre, représentent H ou CH₃, où les cycles phényle dans les formules I*1 à I*5 peuvent également être substitués dans la position 2, 3 et/ou 5 par L comme défini dans la revendication 2.

5. Milieu selon une ou plusieurs des revendications 1 à 4, **caractérisé en ce que** P¹ et P² représentent acrylate, méthacrylate, vinyle, vinyloxy, éther de propényle ou époxyde.

6. Milieu selon une ou plusieurs des revendications 1 à 5, **caractérisé en ce qu'**il comprend additionnellement un ou plusieurs composés des formules II et/ou III : 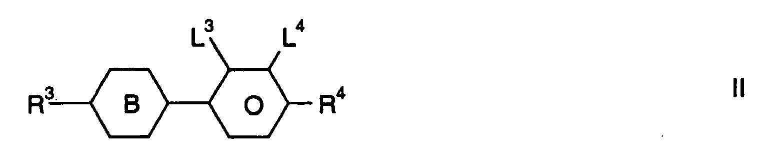 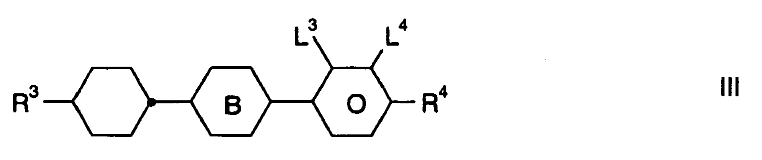
dans lesquelles L³ et L⁴ chacun, indépendamment l'un de l'autre, représentent F ou CI,
R³ et R⁴ chacun, indépendamment l'un de l'autre, représentent alkyle ayant 1 à 12 atomes de C, dans lequel, en addition, un ou deux groupes CH₂ non adjacents peuvent être rem- placés par -O-, -CH=CH-, -CO-, -OCO- ou -COO- de telle sorte que des atomes de O ne soient pas liés directement l'un à l'autre, et

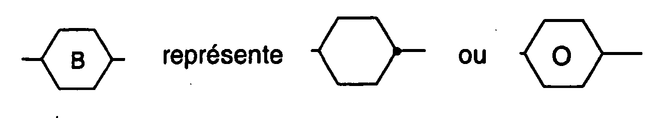

7. Milieu selon la revendication 6, **caractérisé en ce que** les composés des formules II et III sont choisis parmi les formules suivantes : 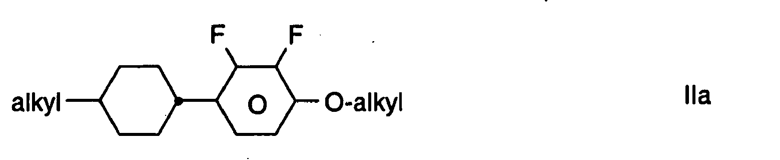 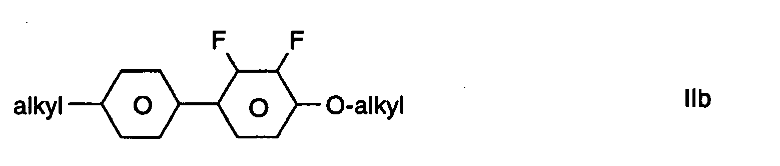 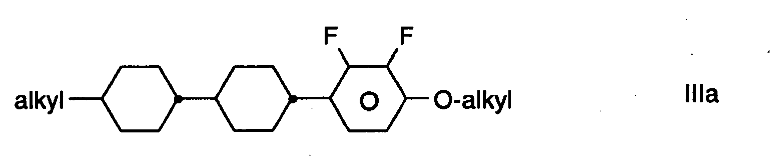 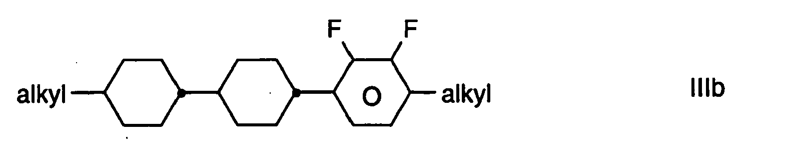 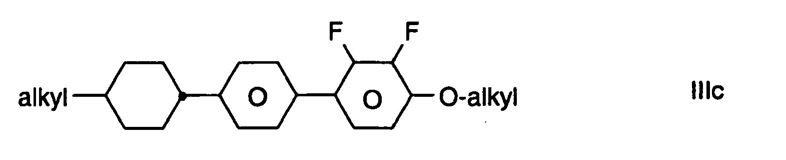 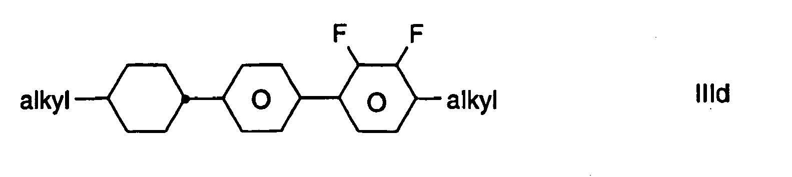 dans lesquelles "alkyl" représente C₁₋₆-alkyle.

8. Milieu selon une ou plusieurs des revendications 1 à 7, **caractérisé en ce qu'**il comprend additionnellement un ou plusieurs composés de la formule VII 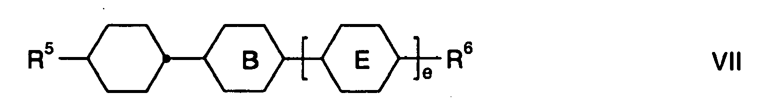 dans laquelle
R⁵ et R⁶, indépendamment l'un de l'autre, ont une des significa- tions indiquées pour R³ dans la revendication 6, 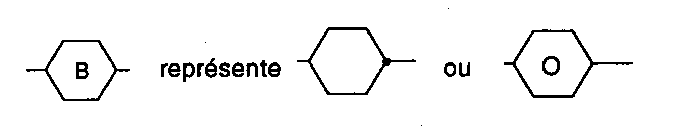 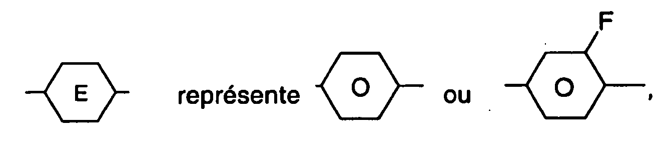 et 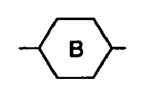
représente 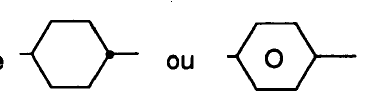
e représente 0 ou 1.

9. Milieu selon la revendication 8, **caractérisé en ce que** les composés de la formule VII sont choisis parmi les formules suivantes : 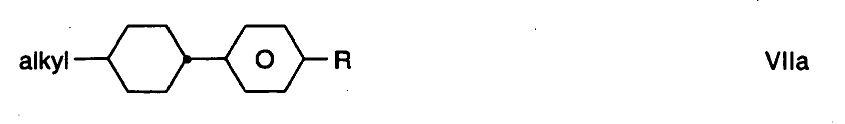 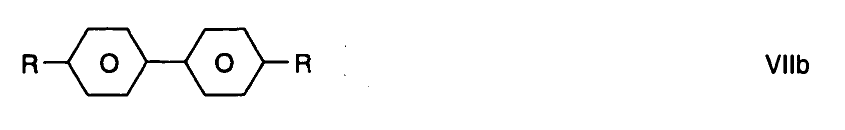 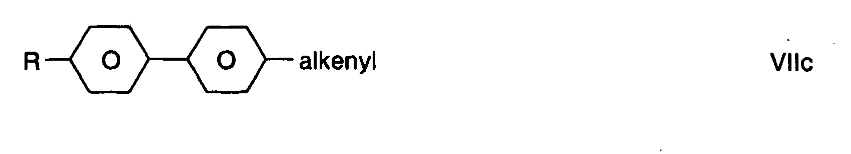 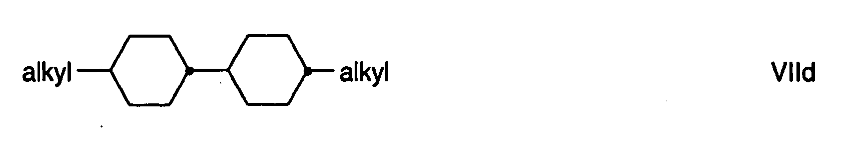 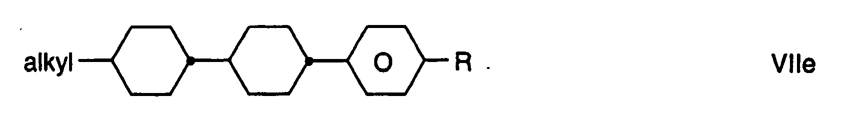 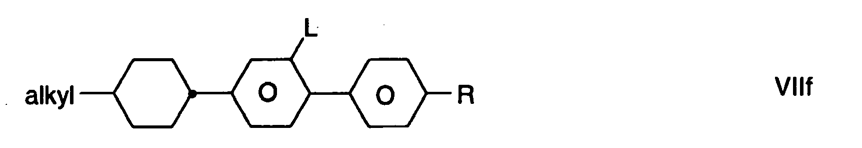 dans lesquelles "alkyl" représente C₁₋₆-alkyle, R représente C₁₋₆-alkyle ou -alcoxy, "alkenyl" représente C₂₋₇-alkényle, et L représente H ou F.

10. Milieu selon une ou plusieurs des revendications 1 à 5, **caractérisé en ce qu'**il comprend additionnellement un ou plusieurs composés choisis parmi les formules suivantes : 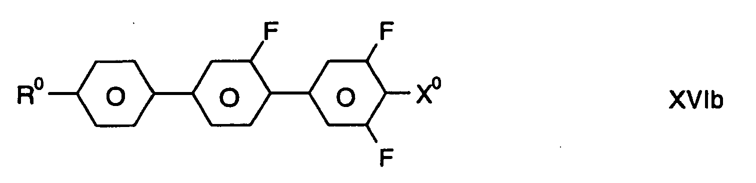 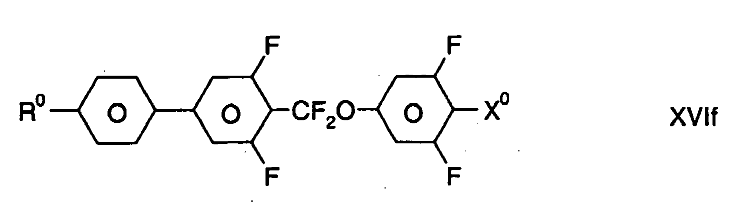 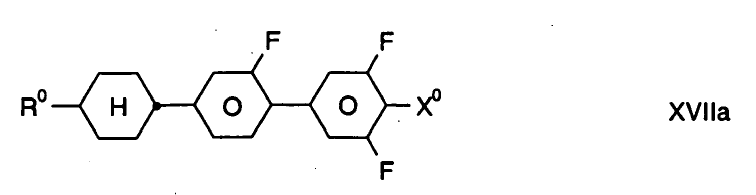 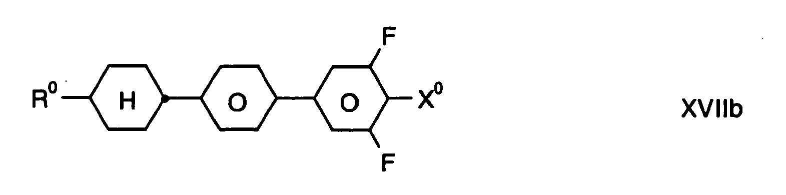 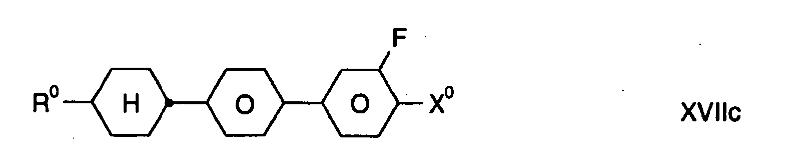 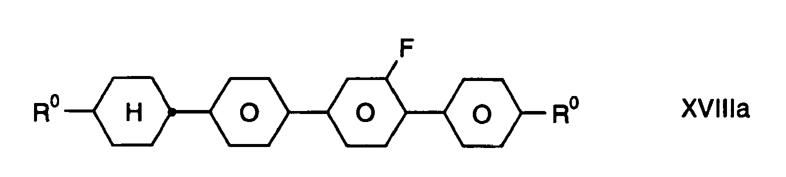 dans lesquelles R⁰ représente alkyle ayant 1 à 6 atomes de C, et X⁰ représente F ou OCF₃.

11. Affichage électro-optique, **caractérisé en ce qu'**il contient, comme diélectrique, un milieu cristallin liquide selon une ou plusieurs des revendications 1 à 10.

12. Affichage électro-optique selon la revendication 11, **caractérisé en ce qu'**il est basé sur l'effet VA, MVA, PSA-VA, OCB ou PSA-OCB.

13. Procédé pour la préparation d'un milieu selon une ou plusieurs des revendications 1 à 10, **caractérisé en ce qu'**un ou plusieurs composés de la formule I est un ou plusieurs composés polymérisables comme définis dans une ou plusieurs des revendications 1 à 5 sont mélangés, optionnellement avec d'autres composés ou additifs.

14. Affichage électro-optique selon la revendication 11 ou 12, **caractérisé en ce que** les composés polymérisables sont polymérisés par photopolymérisation.

15. Affichage électro-optique selon la revendication 14, **caractérisé en ce que** le processus de polymérisation est mis en oeuvre avec une tension appliquée dans l'affichage.
